(19) Europäisches Patentamt
European Patent Office
Office européen des brevets

(11) **EP 4 598 194 A1**

(12) **EUROPEAN PATENT APPLICATION**
published in accordance with Art. 153(4) EPC

(43) Date of publication:
**06.08.2025 Bulletin 2025/32**

(21) Application number: **23869671.0**

(22) Date of filing: **26.05.2023**

(51) International Patent Classification (IPC):
**H04W 72/0453** (2023.01)  **H04W 72/53** (2023.01)

(52) Cooperative Patent Classification (CPC):
**H04W 72/0453; H04W 72/53**

(86) International application number:
**PCT/CN2023/096569**

(87) International publication number:
**WO 2024/066418 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 CN 202211214991**

(71) Applicant: **ZTE Corporation**
**Shenzhen, Guangdong 518057 (CN)**

(72) Inventors:
• **BIAN, Luanjian**
  **Shenzhen, Guangdong 518057 (CN)**

• **DAI, Bo**
  **Shenzhen, Guangdong 518057 (CN)**
• **HU, Youjun**
  **Shenzhen, Guangdong 518057 (CN)**
• **CHEN, Mengzhu**
  **Shenzhen, Guangdong 518057 (CN)**
• **YANG, Weiwei**
  **Shenzhen, Guangdong 518057 (CN)**

(74) Representative: **Vossius & Partner**
**Patentanwälte Rechtsanwälte mbB**
**Siebertstraße 3**
**81675 München (DE)**

(54) **DATA SENDING METHOD, DATA RECEIVING METHOD, COMMUNICATION NODES, AND STORAGE MEDIUM**

(57) The present application discloses a data sending method, a data receiving method, a communication node, and a storage medium. The sending method comprises: determining a target physical resource block (PRB) index according to a first parameter, wherein the first parameter comprises at least one of the following: a reference PRB index, a time slot index, a PRB offset, the number of PRBs comprised in a first frequency resource, a second frequency resource position update duration, and an indication of the second frequency resource; determining a second frequency resource according to the target PRB index; and sending data within the second frequency resource.

**FIG. 2**

## Description

## CROSS-REFERENCE TO RELATED APPLICATION(S)

This application is filed based on and claims priority to Chinese patent application No. 202211214991.4, filed on September 30, 2022, the disclosures of which are incorporated herein by reference in their entities.

## FIELD

The present application relates to the field of communication technology, and in particular to a data sending method and a data receiving method, a communication node, and a storage medium.

## BACKGROUND

The Release-18 version of standard protocol contemplates reducing the maximum bandwidth of Reduced capability user equipment (RedCap UE) to 5 MHz, thereby further reducing the cost and complexity of a user equipment (UE). Specifically, the maximum bandwidths of a physical uplink shared channel (PUSCH) and a physical downlink shared channel (PDSCH) of the Rel-18 RedCap UE are reduced to 5MHz, while the maximum bandwidths of other physical channels and physical signals are not reduced and remain at 20MHz. In other words, for the Rel-18 RedCap UE, the two types of physical channels, PDSCH and PUSCH, can only be transmitted in 5MHz bandwidth, while the other physical channels and physical signals can be transmitted in 20MHz bandwidth.

Based on this technical characteristic, the Rel-18 RedCap UE is only able to cache PDSCH data with 5MHz bandwidth when receiving downlink data. Since the PDSCH is scheduled by the physical downlink control channel (PDCCH) and the PDCCH contains an indication of a frequency domain resource location of the PDSCH, the UE needs to decode the PDCCH to determine the frequency domain resource location of the PDSCH. However, PDCCH decoding requires processing time, and the UE does not know the frequency domain location of the PDSCH before the PDCCH being decoded, and therefore it cannot determine to cache PDSCH data with 5MHz bandwidth on what location in a maximum 20 MHz bandwidth.

## SUMMARY

The following is an overview of the subject matter described in detail herein. This overview is not intended to limit the protection scope of the claims.

It is an object of embodiments of the present application to provide a data sending method, a data receiving method, a first communication node, a second communication node, a computer-readable storage medium, and a computer program product that may be used to determine a frequency domain location of PDSCH data.

In a first aspect, embodiments of the present application provide a method of sending data, said method comprising:

determining a physical resource block PRB index of a second frequency resource according to a first parameter, said first parameter comprising at least one of the following: a reference PRB index, a time slot index, a PRB offset, a number of PRBs contained in the first frequency resource, an update duration of a second frequency resource position, an indication of the second frequency resource;

sending data within said second frequency resource.

In a second aspect, embodiments of the present application provide a method of receiving data, said method comprising:

determining a physical resource block PRB index of a second frequency resource according to a first parameter, said first parameter comprising at least one of the following: a reference PRB index, a time slot index, a physical resource block offset, a number of PRBs contained in the first frequency resource, an update duration of a second frequency resource position, an indication of the second frequency resource;

receiving data within said second frequency resource.

In a third aspect, embodiments of the present application provide a method of sending data, said method comprising:

determining a time domain resource allocation TDRA for a target physical resource according to a first parameter, said first parameter comprising at least one of the following: a bandwidth part BWP, a search space, a radio resource control RRC parameter, a cell level parameter, a set of control resources numbered 0, a time delay gap;

sending data within said target physical resource.

In a fourth aspect, embodiments of the present application provide a first communication node, comprising:

at least one processor;

at least one memory for storing at least one program;

when at least one said program is executed by at least one said processor, implementing the method of sending data as described in the first aspect, alternatively, the method of sending data as described in the third aspect.

In a fifth aspect, embodiments of the present application provide a second communication node, comprising:

at least one processor;

at least one memory for storing at least one program;

when at least one said program is executed by at least one said processor, implementing the method of receiving data as described in the second aspect.

In a sixth aspect, embodiments of the present application provide a computer readable storage medium in which a processor-executable program is stored, said processor-executable program being used to implement when executed by a processor:

the method of sending data as described in the first aspect;

alternatively,

the method of receiving data as described in the second aspect;

alternatively,

the method of sending data as described in the third aspect.

In a seventh aspect, embodiments of the present application provide a computer program product comprising a computer program or computer instructions, said computer program or said computer instructions being stored in a computer-readable storage medium, a processor of a computer device reading said computer program or said computer instructions from said computer-readable storage medium, and said processor executing said computer program or said computer instructions, such that said computer device executes:

the method of sending data as described in the first aspect;

alternatively,

the method of receiving data as described in the second aspect;

alternatively,

the method of sending data as described in the third aspect.

Embodiments of the present application determine a physical resource block PRB index of a second frequency resource according to at least one of a reference PRB index, a time slot index, a physical resource block offset, a number of PRBs contained in a first frequency resource, an update duration of a second frequency resource position, and an indication of the second frequency resource, and thus send or receive data within the second frequency resource. The scheme of embodiments of the present application may be applied in a PDSCH data transmission scenario for determining a location of PDSCH data in the frequency domain.

## BRIEF DESCRIPTION OF THE DRAWINGS

The accompanying drawings are used to provide a further understanding of the technical solutions of the present application and form part of the specification and are used in conjunction with the embodiments of the present application to explain the technical solutions of the present application, and do not constitute a limitation of the technical solutions of the present application.

FIG. 1 is a schematic diagram of an application scenario of embodiments of the present application;

FIG. 2 is a flow diagram of a method of sending data provided by embodiments of the present application;

FIG. 3A is a flow diagram of a method of sending data provided by an embodiment 1-1 of the present application;

FIG. 3B is a flow diagram of a method of sending data provided by an embodiment 1-2 of the present application;

FIG. 4 is a flow diagram of a method of sending data provided by an embodiment 1-3 of the present application;

FIG. 5 is a flow diagram of a method of sending data provided by an embodiment 1-4 of the present application;

FIG. 6 is a flow diagram of a method of sending data provided by an embodiment 1-5 of the present application;

FIG. 7 is a flow diagram of a method of sending data provided by an embodiment 1-6 of the present application;

FIG. 8 is a flow diagram of a method of sending data provided by an embodiment 1-7 of the present application;

FIG. 9 is a flow diagram of a method of sending data provided by an embodiment 1-8 of the present application;

FIG. 10 is a flow diagram of a method of sending data provided by an embodiment 1-9 of the present application;

FIG. 11 is a flow diagram of a method of receiving data provided by embodiments of the present application;

FIG. 12 is a flow diagram of a method of receiving data provided by an embodiment 2-1 of the present application;

FIG. 13 is a flow diagram of a method of receiving data provided by an embodiment 2-2 of the present application;

FIG. 14 is a flow diagram of a method of receiving data provided by an embodiment 2-3 of the present application;

FIG. 15 is a flow diagram of a method of receiving data provided by an embodiment 2-4 of the present application;

FIG. 16 is a flow diagram of a method of receiving data provided by an embodiment 2-5 of the present application;

FIG. 17 is a flow diagram of a method of receiving data provided by an embodiment 2-6 of the present application;

FIG. 18 is a flow diagram of a method of receiving data provided by an embodiment 2-7 of the present application;

FIG. 19 is a flow diagram of a method of receiving data provided by an embodiment 2-8 of the present application;

FIG. 20 is a flow diagram of a method of receiving data provided by an embodiment 2-9 of the present application;

FIG. 21 is a flow diagram of a method of receiving data provided by an embodiment 2-10 of the present application;

FIG. 22 is a flow diagram of a method of sending data provided by an embodiment 3-1 of the present application;

FIG. 23 is a flow diagram of a method of receiving data provided by an embodiment 4-1 of the present application;

FIG. 24 is a schematic diagram of a structure of a first communication node provided by an embodiment of the present application;

FIG. 25 is a schematic diagram of a structure of a second communication node provided by an embodiment of the present application.

## DETAILED DESCRIPTION OF EMBODIMENTS

The present application is further described below in connection with the accompanying drawings of the specification and specific embodiments. The described embodiments shall not be regarded as limitations to the present application, and all other embodiments obtained by a person of ordinary skill in the art without making creative labor fall within the scope protected by the present application.

In the following description, "some embodiments" are referred to, which describe a subset of all possible embodiments, but it is understood that "some embodiments" may be the same subset or a different subset of all possible embodiments, and may be combined with each other without conflict.

Unless otherwise defined, all technical and scientific terms used herein have the same meaning as commonly understood by those skilled in the art belonging to this application. The terms used herein are for the purpose of describing embodiments of the present application only and are not intended to limit the present application.

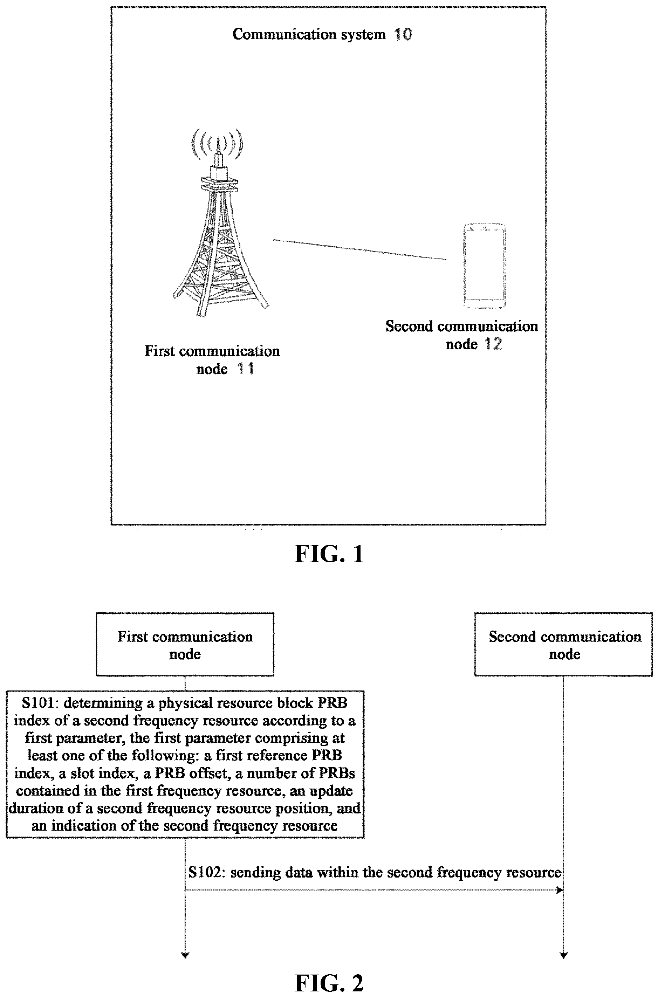

Referring to FIG. 1, FIG. 1 is a schematic diagram of an application scenario of embodiments of the present application. The scenario shown in FIG. 1 includes a communication system 10 that includes a first communication node 11 and a second communication node 12, and the first communication node 11 and the second communication node 12 may communicate wirelessly with each other utilizing air interface resources. Wherein, the first communication node 11 is a data sending end for performing the method of sending data provided by the embodiments of the present application, and the second communication node 12 is a data receiving end for performing the method of receiving data provided by the embodiments of the present application. In one example, the first communication node 11 is a network device and the second communication node 12 is a terminal device. In another example, it may also be that the first communication node 11 is a terminal device and the second communication node 12 is a network device.

The network device may also be referred to as a base station, and the base station may be an Evolutional Node B (eNB or eNodeB) in Long Term Evolution (LTE), Long Term Evolutionadvanced (LTEA), a base station device in a 5G network, or a base station in the future communication system, and so on. The base stations may include various macro base stations, micro base stations, home base stations, wireless far-reaching, routers, Wireless Fidelity (WIFI) devices, or various network-side devices such as primary cells and secondary cells, as well as location management function (LMF) devices. It may also be a location management function (LMF) device. The embodiments of the present application are not limited thereto.

A terminal device is a device with a wireless transceiver function that can be deployed on land, including indoor or outdoor, handheld, wearable, or vehicle-mounted; or deployed on water (e.g., a ship, etc.); or deployed in the air (e.g., on an airplane, a balloon, a satellite, etc.). Said terminal may be a mobile phone, a tablet computer (Pad), a computer with wireless transceiver function, a virtual reality (VR) terminal, an augmented reality (AR) terminal, a wireless terminal in industrial control, wireless terminals in self-driving, wireless terminals in remote medical, wireless terminals in smart grid, wireless terminals in transportation safety, wireless terminals in smart city, wireless terminals in smart home, and so on. The embodiments of the present application do not limit the application scenarios. The terminal may sometimes be also referred to as a user, a user equipment (UE), an access terminal, a UE unit, a UE station, a mobile station, a mobile, a remote station, a remote terminal, a mobile device, a UE terminal, a wireless communication device, a UE agent, or a UE device, etc. The embodiments of the present application are not limited thereto.

It should be understood that the communication system 10 described above is intended to more clearly illustrate the technical solutions of the embodiments of the present application, and does not constitute a limitation of the technical solutions provided by the embodiments of the present application, and a person of ordinary skill in the art may know that, with the evolution of the system architecture and the emergence of new business scenarios, the technical solutions provided by the embodiments of the present application are equally applicable to similar communication systems.

Referring to FIG. 2, FIG. 2 is a flow diagram of a method of sending data provided by embodiments of the present application. The method of sending data comprises the following steps S101-S102:

Step S101: determining a physical resource block PRB index of a second frequency resource according to a first parameter, the first parameter comprising at least one of the following: a reference PRB index, a time slot index, a PRB offset, a number of PRBs contained in the first frequency resource, an update duration of a second frequency resource position, an indication of the second frequency resource;

Step S102: sending data within the second frequency resource.

It is to be understood that the first communication node configures the first parameter, determines the PRB index of the second frequency resource corresponding to the first parameter, i.e., the position of the second frequency resource in the frequency domain, and then sends the data within the second frequency resource to the second communication node.

The method of sending data provided by the present application is described in detail below by means of specific embodiments.

Embodiment 1-1:

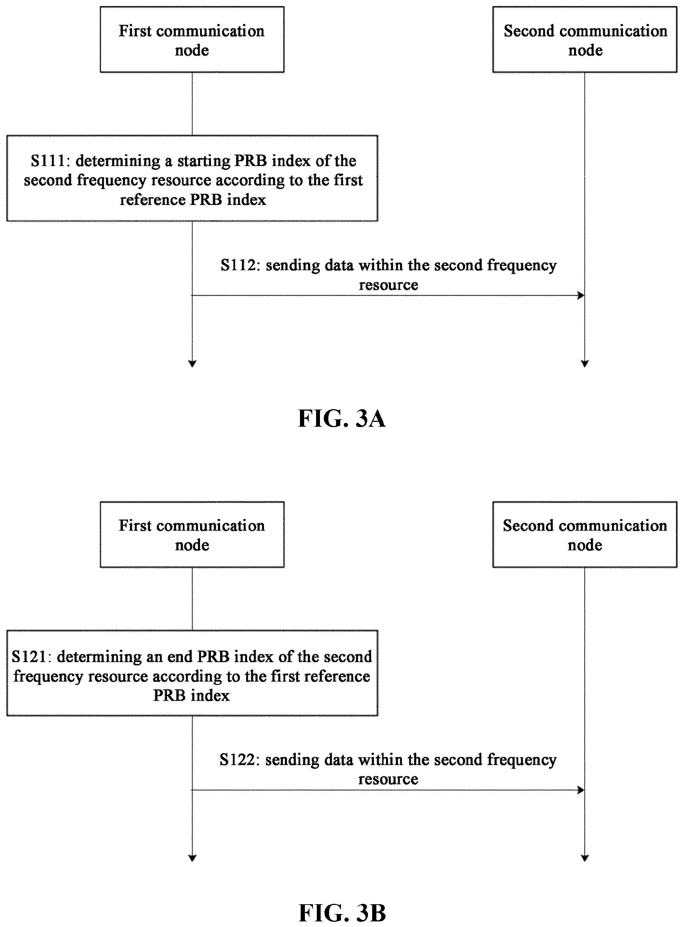

Referring to FIG. 3A, the method of sending data of the present embodiment comprises:

Step S111, the first communication node determining a starting PRB index of the second frequency resource according to the reference PRB index;

Step S112, sending data within the second frequency resource.

Wherein, the reference PRB index may be a PRB index $N_0$ within the first frequency resource. Specifically, the reference PRB index may be a fixed PRB index within the first frequency resource, alternatively, the reference PRB index is indicated by a first high layer parameter.

Exemplarily, the starting PRB index of the second frequency resource may be determined according to the following formula (11):

$$\text{The starting PRB index of the second frequency resource} = \left\lfloor N_0 \cdot 2^{\mu'-\mu} \right\rfloor \quad (11)$$

**In** the formula (11), $N_0$ denotes a reference PRB index, $\mu'$ denotes a subcarrier spacing index of the first frequency resource, and $\mu$ denotes a subcarrier spacing index of the second frequency resource.

For example, $\mu'=0$ corresponds to a 15KHz subcarrier spacing, $\mu=1$ corresponds to a 30KHz subcarrier spacing, in which case the starting PRB index of the second frequency resource equals to $\left\lfloor N_0 \cdot \frac{1}{2} \right\rfloor$.

It is to be noted that the first frequency resource described in the embodiments of the present application may be a Control resource set (CORESET) or a Bandwidth Part (BWP), and the second frequency resource described in the embodiments of the present application may be a frequency resource in which the PDSCH is located or a transmission band.

**In** a specific example, $N_0$ is a fixed PRB index within the CORESET. For example, $N_0$ is a starting PRB index of the CORESET, whereby a starting PRB index of the second frequency resource can be determined according to the starting PRB index of the CORESET.

**In** another specific example, $N_0$ is indicated by the first high layer parameter. It is to be noted that the first high layer parameter may be a variety of types of high layer parameters, and the specific type of the first high layer parameter is not overly limited herein.

Based on the method of this embodiment, the frequency domain positions of the starting PRB of the second frequency resource and the starting PRB of the CORESET may be the same or have overlapping portions.

It is to be understood that the starting PRB index of the second frequency resource remains unchanged within update duration range T of a second frequency resource position, wherein T may be a fixed number of time slots or indicated by a fourth high layer parameter.

**In** a specific example, a number of PRBs contained in said second frequency resource corresponds to a subcarrier spacing. For example, the second frequency resource contains 25 PRBs in the case of a 15KHz subcarrier spacing, and the second frequency resource contains 11 or 12 PRBs in the case of a 30KHz subcarrier spacing. A number of PRBs contained in the second frequency resource described in this embodiment is also applicable to other embodiments.

It should be appreciated that the position of the second frequency resource in the frequency domain is determined according to the starting PRB index of the second frequency resource, and data is sent within the second frequency resource.

Embodiment 1-2:

Referring to FIG. 3B, the method of sending data of the present embodiment comprises:

Step S121: the first communication node determining an end PRB index of the second frequency resource according to the reference PRB index;

Step S122: sending data within the second frequency resource.

Specifically, the reference PRB index described in step S121 is the end PRB index of the first frequency resource.

That is, the end PRB index of the second frequency resource may be determined according to the end PRB index of the first frequency resource, and the specific process includes:

in the case where the subcarrier spacing of the first frequency resource is less than or equal to the subcarrier spacing of the second frequency resource, the end PRB index of the second frequency resource is determined according to the following formula (12):

$$\text{The end PRB index of the second frequency resource} = \left\lfloor N_1 \cdot 2^{\mu' - \mu} \right\rfloor \quad (12)$$

Alternatively,

in the case where the subcarrier spacing of the first frequency resource is greater than the subcarrier spacing of the second frequency resource, the end PRB index of the second frequency resource is determined according to the following formula (13):

$$\text{The end PRB index of the second frequency resource} = N_1 \cdot 2^{\mu' - \mu} + 1 \quad (13)$$

In the formula (12) or formula (13), $N_1$ denotes an end PRB index of the first frequency resource, $\mu'$ denotes a subcarrier spacing index of the first frequency resource, and $\mu$ denotes a subcarrier spacing index of the second frequency resource.

It is to be noted that the first frequency resource may be a control resource set (CORESET) or a BWP. The second frequency resource may be a frequency resource in which the PDSCH is located or a transmission band.

In this embodiment, $N_1$ is the end PRB index of the CORESET, and based on the method of this embodiment, the end PRB of the second frequency resource may have the same frequency domain location or an overlapping portion with the end PRB of the CORESET.

In a specific example, the method of the present embodiment is used in the case where the end PRB of the CORESET is the end PRB of the BWP in which the CORESET is located.

In a specific example, the end PRB index of the second frequency resource is unchanged within update duration range T of the second frequency resource position, wherein T may be a fixed number of time slots or indicated by a fourth high layer parameter.

It should be appreciated that a position of the second frequency resource in the frequency domain can be determined according to the end PRB index of the second frequency resource and data can be sent within the second frequency resource.

Embodiment 1-3:

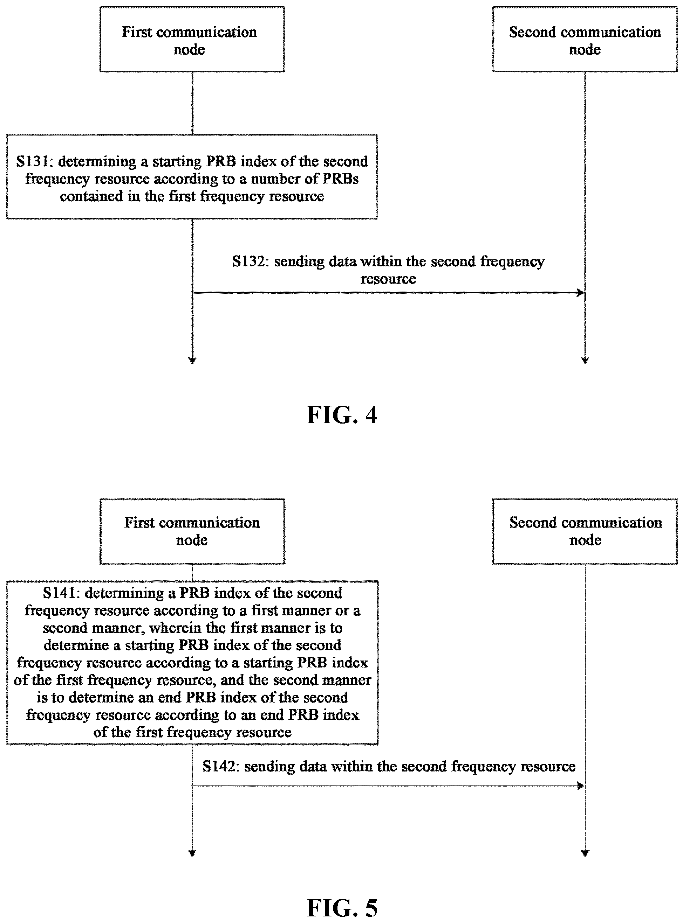

Referring to FIG. 4, the method of sending data of this embodiment comprises:

Step S131: the first communication node determining a starting PRB index of the second frequency resource according to a number of PRBs contained in the first frequency resource;

Step S132: sending data within the second frequency resource.

Exemplarily, the starting PRB index of the second frequency resource may be determined according to the following formula (14):

$$\text{The starting PRB index of the second frequency resource} = \left\lfloor \left( N_S + \left\lfloor \frac{N_{PRB}}{2} \right\rfloor \right) \cdot 2^{\mu' - \mu} \right\rfloor - \left\lfloor \frac{P}{2} \right\rfloor \quad (14)$$

In the formula (14), $N_S$ denotes the starting PRB index of the first frequency resource, $N_{PRB}$ denotes a number of PRBs contained in the first frequency resource, P denotes the number of PRBs contained in the second frequency resource, $\mu'$ denotes the subcarrier spacing index of the first frequency resource, and $\mu$ denotes the subcarrier spacing index of the second frequency resource.

It is to be noted that the first frequency resource may be a CORESET or a BWP, and a number of PRBs contained in the first frequency resource is the number of PRBs contained in the CORESET or the BWP. The second frequency resource may be a frequency resource in which the PDSCH is located or a transmission band.

Based on the method of present embodiment, the intermediate PRBs of the second frequency resource and the intermediate PRBs of the first frequency resource may have the same frequency domain position or have overlapping portions. For example, if the index of the intermediate PRB of the second frequency resource is $A + \left\lfloor \frac{P}{2} \right\rfloor$, A is the index of the starting PRB of the second frequency resource, and P is the number of PRBs contained in the second frequency resource, then the index of the intermediate PRB of the second frequency resource may be denoted as $N_S + \left\lceil \frac{N_{PRB}}{2} \right\rceil$.

In a specific example, the index of the starting PRB of the second frequency resource remains unchanged within update duration range T of a second frequency resource position, wherein T is a fixed number of time slots, alternatively, is indicated by a fourth high layer parameter.

In this embodiment, data is sent within the second frequency resource.

Embodiment 1-4:

Referring to FIG. 5, the method of sending data of the present embodiment comprises:

Step S141: the first communication node determining a PRB index of the second frequency resource according to a first manner or a second manner, wherein the first manner is to determine a starting PRB index of the second frequency resource according to a starting PRB index of the first frequency resource, and the second manner is to determine an end PRB index of the second frequency resource according to an end PRB index of the first frequency resource;

Step S142: sending data within the second frequency resource.

It is to be noted that the first frequency resource may be a BWP or a CORESET, and the second frequency resource may be a frequency resource in which the PDSCH is located or a transmission band.

In a particular implementation, the PRB index of the second frequency resource may be determined using the first manner or the second manner as directed by the second high layer parameter; or, the PRB index of the second frequency resource may be determined using the first manner and the second manner alternately.

It should be appreciated that the first manner and the second manner described above for determining the PRB index of the second frequency resource may be used alternately. For example, in units of time slots, the first manner and the second manner are used alternately between time slots; or, in units of data blocks, the first manner and the second manner are used alternately between data blocks; or, in units of an update duration of the second frequency resource position, the first manner and the second manner are used alternately between update durations, the use of one of the first manner or the second manner remaining unchanged within the update duration range. The update duration of the second frequency resource position is a fixed number of time slots, or is indicated by a fourth high layer parameter.

In this embodiment, a position of the second frequency resource in the frequency domain is determined according to a starting PRB index or an end PRB index of the second frequency resource, and data is sent within the second frequency resource.

Embodiment 1-5:

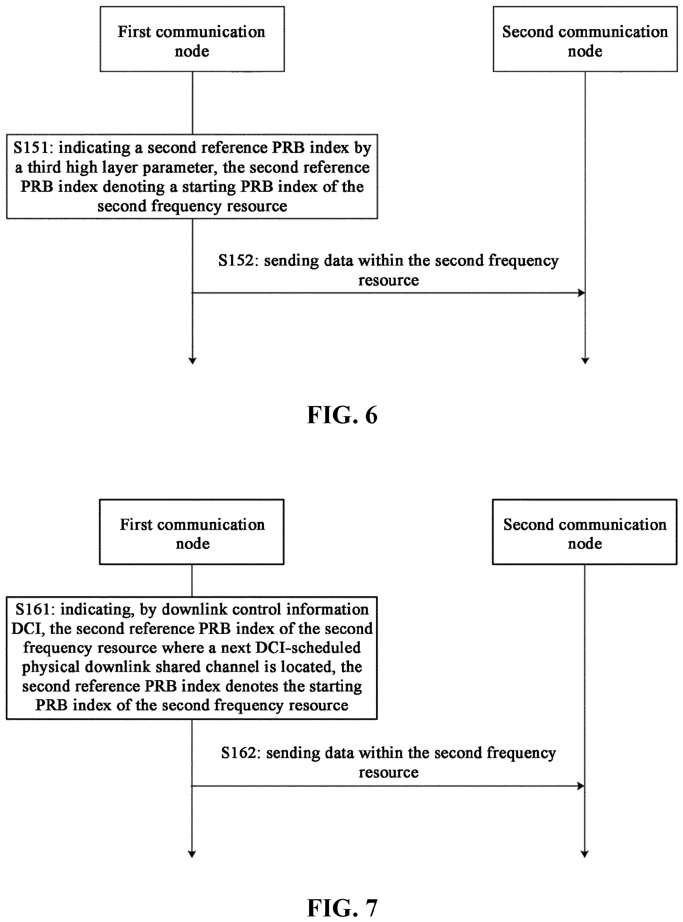

Referring to FIG. 6, the method of sending data of this embodiment comprises:

Step S151: the first communication node indicating a reference PRB index by a third high layer parameter, and the reference PRB index denotes a starting PRB index of the second frequency resource;

Step S152: sending data within the second frequency resource.

It is to be noted that the first frequency resource may be a BWP or a CORESET, and the second frequency resource may be the frequency resource in which the PDSCH is located or a transmission band.

In this embodiment, a position of the second frequency resource in the frequency domain is determined according to a starting PRB index of the second frequency resource, and data is sent within the second frequency resource.

In a specific example, a first system information block, i.e., SIB 1 (System information block 1), may indicate a starting PRB index of a frequency resource (i.e., the second frequency resource) in which the common PDSCH is located. The common PDSCH at least comprises one of the following: other system information block SIB, message 2 (Msg2), message 4 (Msg4), paging message (Paging).

Embodiment 1-6:

Referring to FIG. 7, the method of sending data of the present embodiment comprises:

Step S161: indicating, by Downlink control information (DCI), the first communication node the reference PRB index of the second frequency resource where the next DCI-scheduled physical downlink shared channel is located, the reference PRB index here denotes the starting PRB index of the second frequency resource;

Step S162: sending data within the second frequency resource.

It is to be illustrated that the first frequency resource may be a BWP or a CORESET, and the second frequency resource may be a frequency resource in which the PDSCH is located or a transmission band.

In this embodiment, a position of the second frequency resource in the frequency domain is determined according to a starting PRB index of the second frequency resource, and data is sent within the second frequency resource.

Embodiment 1-7:

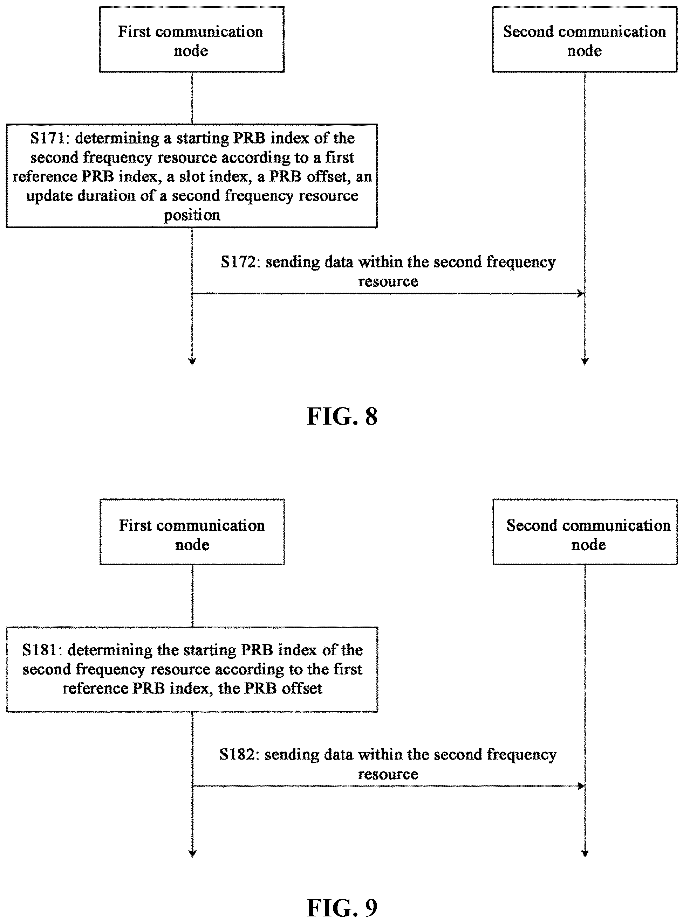

Referring to FIG. 8, the method of sending data of the present embodiment comprises:

Step S171: the first communication node determining a starting PRB index of the second frequency resource according to a reference PRB index, a time slot index, a PRB offset, and an update duration of a second frequency resource position;

Step S172: sending data within the second frequency resource.

In a specific example, the starting PRB index of the second frequency resource is determined according to the following formula (15):

$$\text{The starting PRB index of the second frequency resource} = N_0 + mod\left(\frac{S}{T}, K\right) \cdot N_{offset} \quad (15)$$

In formula (15), $N_0$ denotes the reference PRB index, $N_{offset}$ denotes the PRB offset, S denotes the time slot index, T denotes the update duration of the second frequency resource position, and K denotes the number of second frequency resources contained on the frequency domain.

The number K of second frequency resources contained on the frequency domain may be determined according to the following formula (16):

$$K = \left\lfloor \frac{M_{PRB} - N_0 - 1}{N_{offset}} \right\rfloor + 1 \quad (16)$$

In the formula (16), $M_{PRB}$ denotes the number of PRBs contained in the first frequency resource.

It will be appreciated that the reference PRB index is a fixed value, or, the reference PRB index may be determined according to the BWP bandwidth, or, the reference PRB index is indicated by the first high layer parameter.

It will be appreciated that the PRB offset is a fixed value, or, the PRB offset is indicated by a fifth high layer parameter.

It will be appreciated that the update duration of the second frequency resource position is a fixed number of time slots, or, the update duration of the second frequency resource position is indicated by the fourth high layer parameter.

In another specific example, the starting PRB index of the second frequency resource is determined according to the following formula (17):

$$\text{The starting PRB index of the second frequency resource} = mod\left(N_0 + \frac{S}{T} \cdot N_{offset}, M_{PRB}\right) \quad (17)$$

In the formula (17), $M_{PRB}$ denotes the number of PRBs contained in the BWP, $N_0$ denotes the reference PRB index, $N_{offset}$ denotes the PRB offset, S denotes the time slot index, and T denotes the update duration of the second frequency resource position.

Embodiment 1-8:

Referring to FIG. 9, the method of sending data of this embodiment comprises:

Step S181: the first communication node determining the starting PRB index of the second frequency resource according to the reference PRB index, and the PRB offset;
Step S182: sending data within the second frequency resource.

Exemplarily, the starting PRB index of the second frequency resource is equal to $N_0$, or, is equal to $N_0 + N_{offset}$. $N_0$

is the reference PRB index, and $N_{offset}$ is the PRB offset.

In a specific implementation, $N_0$ and $N_0+N_{offset}$ may be used alternately as the starting PRB index of the second frequency resource in the time domain.

For example, in units of time slots, $N_0$ and $N_0+N_{offset}$ may be used alternately as the starting PRB index of the second frequency resource between the time slots;

alternatively, in units of data blocks, $N_0$ and $N_0+N_{offset}$ may be used alternately as the starting PRB index of the second frequency resource between the data blocks;

alternatively, in units of the update duration of the second frequency resource position, $N_0$ and $N_0+N_{offset}$ may be used alternately as the starting PRB index of the second frequency resource between the update durations, with one of the $N_0$ or $N_0+N_{offset}$ being used unchanged within update duration range. The update duration of the second frequency resource position is a fixed number of time slots or is indicated by a fourth high layer parameter.

Embodiment 1-9:

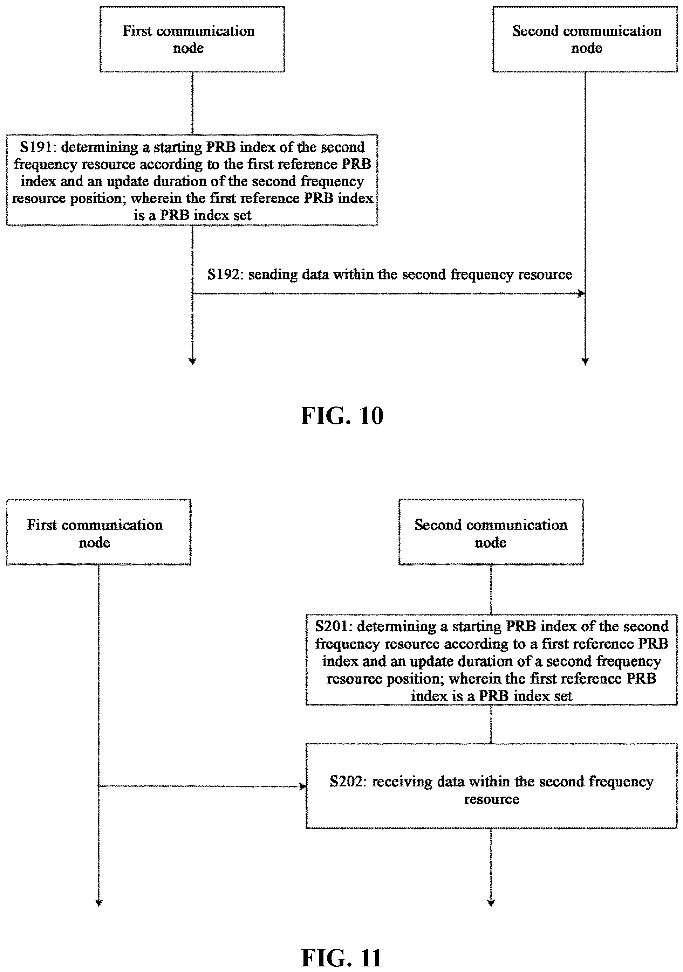

Referring to FIG. 10, the method of sending data of this embodiment comprises:

Step S191: the first communication node determining a starting PRB index of the second frequency resource according to the reference PRB index and the update duration of the second frequency resource position; wherein the reference PRB index is a PRB index set.

Step S192: sending data within the second frequency resource.

In a specific implementation, the starting PRB index of the second frequency resource may be sequentially updated using the PRB index in the PRB index set between the update durations of the second frequency resource position.

That is, the starting PRB of the second frequency resource remains unchanged within the update duration range, and the starting PRB index of the second frequency resource is sequentially updated using the PRB index in the PRB index set between update durations.

It will be appreciated that the PRB index set is a fixed set, or, the PRB index set may be determined according to the BWP bandwidth, or, the PRB index set is indicated by a high layer parameter; and the update duration of the second frequency resource position is a fixed number of time slots, or, the update duration of the second frequency resource position is indicated by a fourth high layer parameter.

Referring to FIG. 11, FIG. 11 is a flow diagram of a method of receiving data provided by an embodiment of the present application. The method of receiving data comprises the following steps:

Step S201: determining a physical resource block PRB index of the second frequency resource according to a first parameter, the first parameter comprising at least one of the following: a reference PRB index, a time slot index, a physical resource block offset, the number of PRBs contained in the first frequency resource, an update duration of a second frequency resource position, and an indication of the second frequency resource;

Step S202: receiving data within the second frequency resource.

It is to be understood that the second communication node determines the PRB index of the second frequency resource by the first parameter, thereby obtaining the position of the second frequency resource in the frequency domain, and then receives the data sent by the first communication node within the second frequency resource.

The method of receiving data provided by the present application is described in detail below by means of specific embodiments.

Embodiment 2-1:

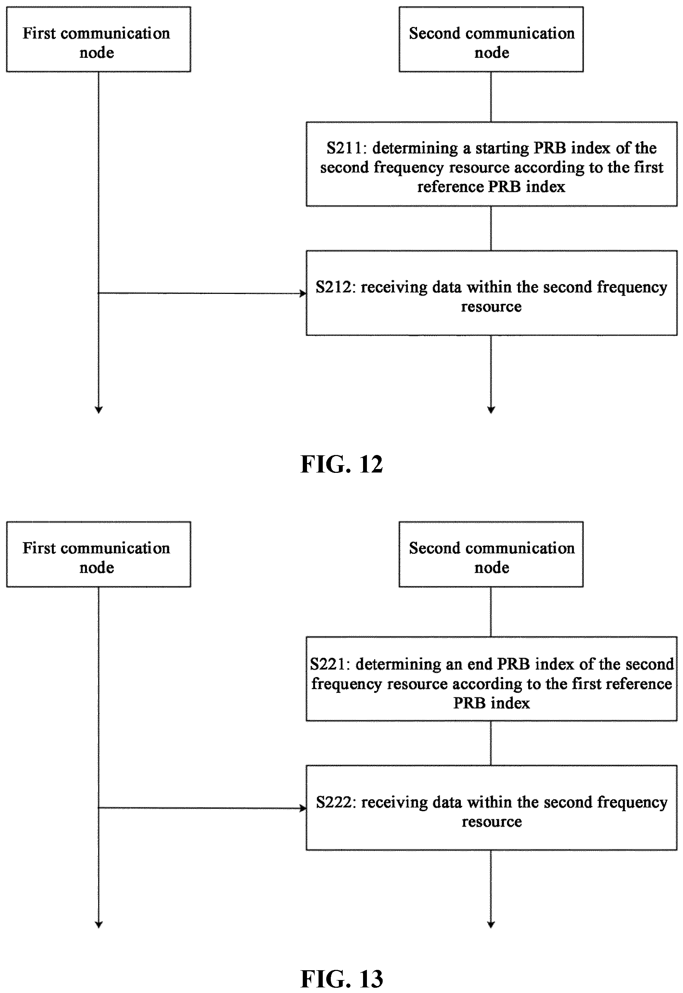

Referring to FIG. 12, the method of receiving data of the present embodiment comprises:

Step S211: the second communication node determining a starting PRB index of the second frequency resource according to the reference PRB index;

Step S212: receiving data within the second frequency resource.

Wherein the reference PRB index may be a PRB index $N_0$ within the first frequency resource. Specifically, the reference PRB index may be a fixed PRB index within the first frequency resource, or, the reference PRB index is indicated by a first high layer parameter.

Exemplarily, the starting PRB index of the second frequency resource may be determined according to the following formula (21):

$$\text{The starting PRB index of the second frequency resource} = \left\lfloor N_0 \cdot 2^{\mu' - \mu} \right\rfloor \quad (21)$$

In the above formula (21), $N_0$ denotes a reference PRB index, $\mu'$ denotes a subcarrier spacing index of the first frequency resource, and $\mu$ denotes a subcarrier spacing index of the second frequency resource.

For example, $\mu'=0$ corresponds to a 15KHz subcarrier spacing, $\mu=1$ corresponds to a 30KHz subcarrier spacing, in which case the starting PRB index of the second frequency resource is equal to $\left\lfloor N_0 \cdot \frac{1}{2} \right\rfloor$.

It is to be illustrated that the first frequency resource described in the embodiments of the present application may be a control resource set CORESET or BWP, and the second frequency resource described in the embodiments of the present application may be a frequency resource in which the PDSCH is located or a transmission band.

In a specific example, $N_0$ is a fixed PRB index within the CORESET. For example, $N_0$ is a starting PRB index of the CORESET, and a starting PRB index of the second frequency resource can be determined according to the starting PRB index of the CORESET.

In another specific example, $N_0$ is indicated by the first high layer parameter. It is to be illustrated that the first high layer parameter may be a variety of types of high layer parameters, and the embodiments of the present application do not overly limit the specific types of the first high layer parameter.

Based on the method of the present embodiment, the frequency domain positions of the starting PRB of the second frequency resource and the starting PRB of the CORESET may be the same or have overlapping portions.

It will be appreciated that the starting PRB index of the second frequency resource remains unchanged within an update duration range T of a second frequency resource position, wherein T may be a fixed number of time slots or indicated by a fourth high layer parameter.

In a specific example, the number of PRBs contained in said second frequency resource corresponds to a subcarrier spacing. For example, the second frequency resource contains 25 PRBs in the case of a 15KHz subcarrier spacing, and the second frequency resource contains 11 or 12 PRBs in the case of a 30KHz subcarrier spacing. The number of PRBs contained in the second frequency resource described in this embodiment is also applicable to other embodiments.

It should be appreciated that the second communication node determines the position of the second frequency resource in the frequency domain according to the starting PRB index of the second frequency resource and receives data within the second frequency resource.

Embodiment 2-2:

Referring to FIG. 13, the method of receiving data of this embodiment comprises:

Step S221: the second communication node determining an end PRB index of the second frequency resource according to the reference PRB index;

Step S222: receiving data within the second frequency resource.

Specifically, the reference PRB index described in step S221 is the end PRB index of the first frequency resource.

That is, the end PRB index of the second frequency resource may be determined according to the end PRB index of the first frequency resource, and the specific process includes:
in the case where the subcarrier spacing of the first frequency resource is less than or equal to the subcarrier spacing of the second frequency resource, the end PRB index of the second frequency resource is determined according to the following formula (22):

$$\text{The end PRB index of the second frequency resource} = \left\lfloor N_1 \cdot 2^{\mu' - \mu} \right\rfloor \quad (22)$$

Alternatively,

in the case where the subcarrier spacing of the first frequency resource is greater than the subcarrier spacing of the second frequency resource, the end PRB index of the second frequency resource is determined according to the following formula (23):

$$\text{The end PRB index of the second frequency resource} = N_1 \cdot 2^{\mu' - \mu} + 1 \quad (23)$$

In the above formulae (22) or (23), $N_1$ denotes the end PRB index of the first frequency resource, $\mu'$ denotes the subcarrier spacing index of the first frequency resource, and $\mu$ denotes the subcarrier spacing index of the second frequency resource.

It is to be illustrated that the first frequency resource may be a control resource set CORESET or BWP, and the second frequency resource may be a frequency resource in which the PDSCH is located or a transmission band.

In this embodiment, $N_1$ is the end PRB index of the CORESET, and based on the method of this embodiment, the end PRB of the second frequency resource may have the same frequency domain position or an overlapping portion with the end PRB of the CORESET.

In a specific example, the method of the present embodiment is used in the case where the end PRB of the CORESET is the end PRB of the BWP in which the CORESET is located.

In a specific example, the end PRB index of the second frequency resource is unchanged within an update duration range T of a second frequency resource position, wherein T may be a fixed number of time slots or indicated by a fourth high layer parameter.

It should be appreciated that a position of the second frequency resource in the frequency domain may be determined according to the end PRB index of the second frequency resource, and data is received within the second frequency resource.

Embodiment 2-3:

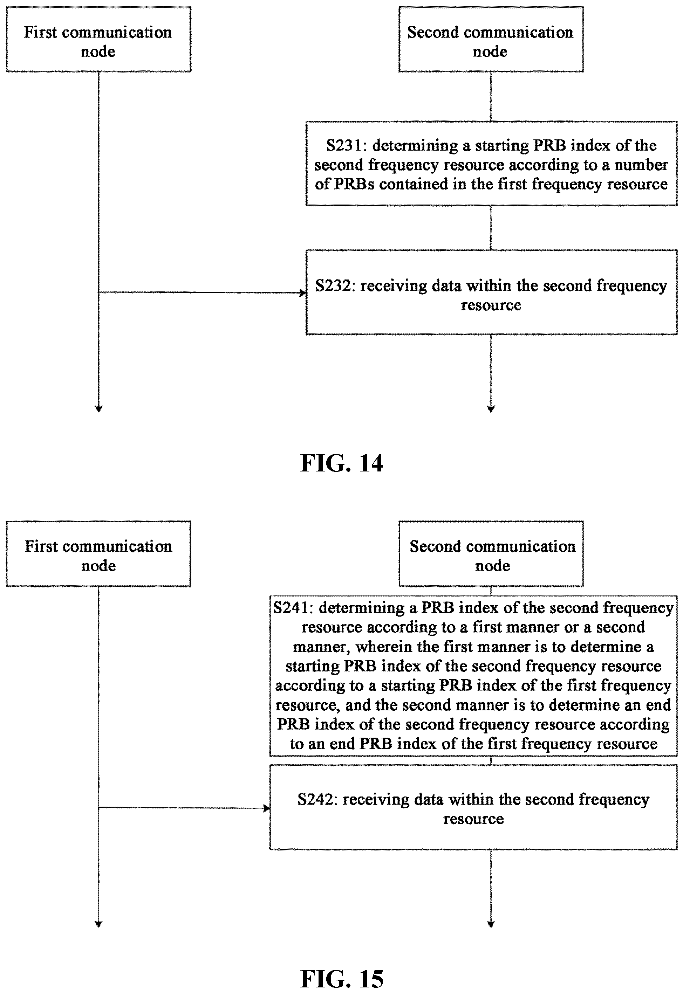

Referring to FIG. 14, the method of receiving data of this embodiment comprises:

Step S231: the second communication node determining a starting PRB index of the second frequency resource according to the number of PRBs contained in the first frequency resource;

Step S232: receiving data within the second frequency resource.

Exemplarily, the starting PRB index of the second frequency resource may be determined according to the following formula (24):

$$\text{The starting PRB index of the second frequency resource} = \left\lfloor \left( N_S + \left\lfloor \frac{N_{PRB}}{2} \right\rfloor \right) \cdot 2^{\mu' - \mu} \right\rfloor - \left\lfloor \frac{P}{2} \right\rfloor \quad (24)$$

In the formula (24), $N_S$ denotes the starting PRB index of the first frequency resource, $N_{PRB}$ denotes the number of PRBs contained in the first frequency resource, P denotes the number of PRBs contained in the second frequency resource, $\mu'$ denotes the subcarrier spacing index of the first frequency resource, and $\mu$ denotes the subcarrier spacing index of the second frequency resource.

It is to be illustrated that the first frequency resource may be a CORESET or a BWP, and the number of PRBs contained in the first frequency resource is the number of PRBs contained in the CORESET. The second frequency resource may be a frequency resource where the PDSCH is located or a transmission band.

Based on the method of the present embodiment, the intermediate PRBs of the second frequency resource and the intermediate PRBs of the first frequency resource may have the same frequency domain position or have overlapping portions. For example, if the intermediate PRB index of the second frequency resource is $A + \left\lfloor \frac{P}{2} \right\rfloor$, A is the starting PRB index of the second frequency resource, and P is the number of PRBs contained in the second frequency resource, then the intermediate PRB index of the second frequency resource may be represented as $N_S + \left\lfloor \frac{N_{PRB}}{2} \right\rfloor$.

In a specific example, the starting PRB index of the second frequency resource is unchanged within an update duration range T of a second frequency resource position, wherein T is a fixed number of time slots, or, is indicated by a fourth high layer parameter.

In this embodiment, a position of the second frequency resource in the frequency domain is determined according to the starting PRB index of the second frequency resource, and data is received within the second frequency resource.

Embodiment 2-4:

Referring to FIG. 15, the method of receiving data of this embodiment comprises:

Step S241: the second communication node determining a PRB index of the second frequency resource according to a first manner or a second manner, wherein the first manner is to determine a starting PRB index of the second frequency resource according to a starting PRB index of the first frequency resource, and the second manner is to determine an end PRB index of the second frequency resource according to an end PRB index of the first frequency resource;
Step S242: receiving data within the second frequency resource.

It is to be illustrated that the first frequency resource may be a BWP or a CORESET, and the second frequency resource may be a frequency resource where the PDSCH is located or a transmission band.
In a specific implementation, the PRB index of the second frequency resource may be determined using the first manner or the second manner as indicated by the second high layer parameter; or, the PRB index of the second frequency resource may be determined using the first manner and the second manner alternately.
It will be appreciated that the first manner and the second manner described above for determining the PRB index of the second frequency resource may be used alternately. For example, in units of time slots, the first manner and the second manner are used alternately between time slots; or, in units of data blocks, the first manner and the second manner are used alternately between data blocks; or, in units of update duration of the second frequency resource position, the first manner and the second manner are used alternately between update durations, with the use of one of the first manner or the second manner remaining unchanged within the update duration range. The update duration of the second frequency resource position is a fixed number of time slots, or is indicated by a fourth high layer parameter.
In this embodiment, a position of the second frequency resource in the frequency domain is determined according to a starting PRB index or an end PRB index of the second frequency resource, and data is received within the second frequency resource.

Embodiment 2-5:

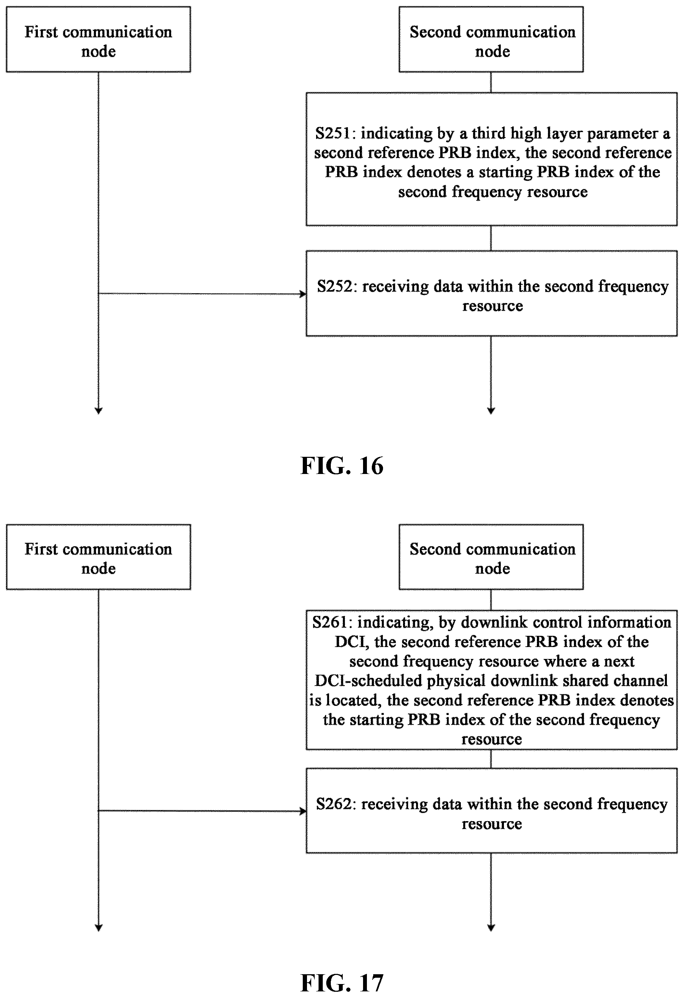

Referring to FIG. 16, the method of receiving data of this embodiment comprises:

Step S251: indicating, by the third high layer parameter, the second communication node a reference PRB index, the reference PRB index indicates a starting PRB index of the second frequency resource;

Step S252: receiving data within the second frequency resource.

It is to be illustrated that the first frequency resource may be a BWP or a CORESET, and the second frequency resource may be a frequency resource where the PDSCH is located or a transmission band.
In a specific example, the second communication node receives a first system information block SIB1, and a starting PRB index of the frequency resource (i.e., the second frequency resource) where the common PDSCH is located may be determined according to SIB1. The common PDSCH at least comprises one of the following: other system information block SIB, message 2 (Msg2), message 4 (Msg4), paging message (Paging).
In this embodiment, a position of the second frequency resource in the frequency domain is determined according to a starting PRB index of the second frequency resource, and data is received within the second frequency resource.

Embodiment 2-6:

Referring to FIG. 17, the method of receiving data of this embodiment comprises:

Step S261: indicating, by Downlink control information (DCI), the second communication node the reference PRB index of the second frequency resource where the next DCI-scheduled physical downlink shared channel is located, the reference PRB index denotes the starting PRB index of the second frequency resource;

Step S262: receiving data within the second frequency resource.

It is to be illustrated that the first frequency resource may be a BWP or a CORESET, and the second frequency resource may be a frequency resource where the PDSCH is located or a transmission band.

In this embodiment, a position of the second frequency resource in the frequency domain is determined according to a starting PRB index of the second frequency resource, and data is received within the second frequency resource.

Embodiment 2-7:

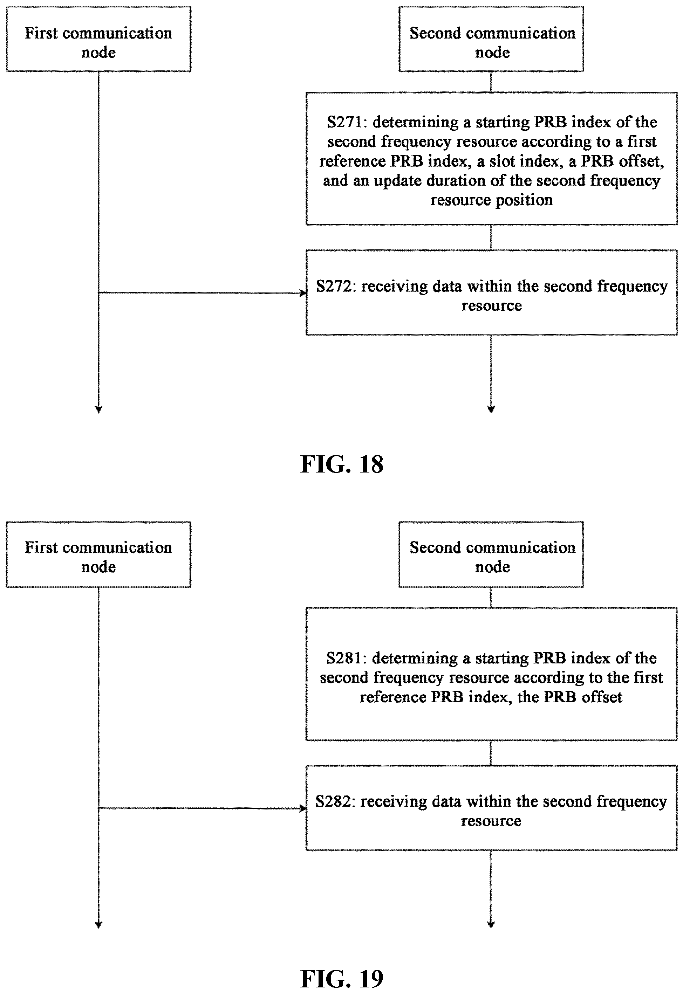

Referring to FIG. 18, the method of receiving data of the present embodiment comprises:

Step S271: the second communication node determining a starting PRB index of the second frequency resource according to a reference PRB index, a time slot index, a PRB offset, the number of PRBs contained in the first frequency resource, and an update duration of the second frequency resource position;

Step S272: receiving data within the second frequency resource.

In a specific example, the starting PRB index of the second frequency resource is determined according to the following formula (25):

$$\text{The starting PRB index of the second frequency resource} = N_0 + mod\left(\frac{S}{T}, K\right) \cdot N_{offset} \quad (25)$$

In the formula (25), $N_0$ denotes a reference PRB index, $N_{offset}$ denotes a PRB offset, S denotes a time slot index, T denotes an update duration of a second frequency resource position, and K denotes the number of second frequency resources contained on the frequency domain.

The number of second frequency resources K contained on the frequency domain can be determined according to the following formula (26):

$$K = \left\lfloor \frac{M_{PRB} - N_0 - 1}{N_{offset}} \right\rfloor + 1 \quad (26)$$

In the formula (26), $M_{PRB}$ denotes the number of PRBs included in the first frequency resource.

It is to be understood that the reference PRB index is a fixed value, or, the reference PRB index may be determined according to the BWP bandwidth, or, the reference PRB index is indicated by the first high layer parameter.

It will be appreciated that the PRB offset is a fixed value, or, the PRB offset is indicated by a fifth high layer parameter.

It will be appreciated that the update duration of the second frequency resource position is a fixed number of time slots, or, the update duration of the second frequency resource position is indicated by the fourth high layer parameter.

In another specific example, the starting PRB index of the second frequency resource is determined according to the following formula (27):

$$\text{The starting PRB index of the second frequency resource} = mod\left(N_0 + \frac{S}{T} \cdot N_{offset}, M_{PRB}\right) \quad (27)$$

In the formula (27), $M_{PRB}$ denotes the number of PRBs contained in the first frequency resource, $N_0$ denotes the reference PRB index, $N_{offset}$ denotes the PRB offset, S denotes the time slot index, and T denotes update duration of the second frequency resource position.

It is to be illustrated that the first frequency resource may be a BWP or a CORESET, and the second frequency resource may be a frequency resource where the PDSCH is located or a transmission band.

Embodiment 2-8:

Referring to FIG. 19, the method of receiving data of the present embodiment comprises:

Step S281: the second communication node determining a starting PRB index of the second frequency resource according to the reference PRB index, the PRB offset;

Step S282: receiving data within the second frequency resource.

Exemplarily, the starting PRB index of the second frequency resource is equal to $N_0$, or, is equal to $N_0+N_{offset}$. $N_0$ is the reference PRB index and $N_{offset}$ is the PRB offset.

In a specific implementation, $N_0$ and $N_0+N_{offset}$ may be used alternately as the starting PRB index of the second frequency resource in the time domain.

For example, in units of time slots, $N_0$ and $N_0+N_{offset}$ are used alternately as the starting PRB index of the second frequency resource between time slots;

alternatively, in units of data blocks, $N_0$ and $N_0+N_{offset}$ are used alternately as the starting PRB index of the second frequency resource between the data blocks;

alternatively, in units of update durations of the second frequency resource position, $N_0$ and $N_0+N_{offset}$ are used alternately as the starting PRB index of the second frequency resource between the update durations, with use of one of $N_0$ or $N_0+N_{offset}$ remaining unchanged within the update duration range. The update duration of the second frequency resource position is a fixed number of time slots, or is indicated by a fourth high layer parameter.

It will be appreciated that the reference PRB index is a fixed value, or, the reference PRB index may be determined according to the BWP bandwidth, or, the reference PRB index is indicated by the first high layer parameter.

Embodiment 2-9:

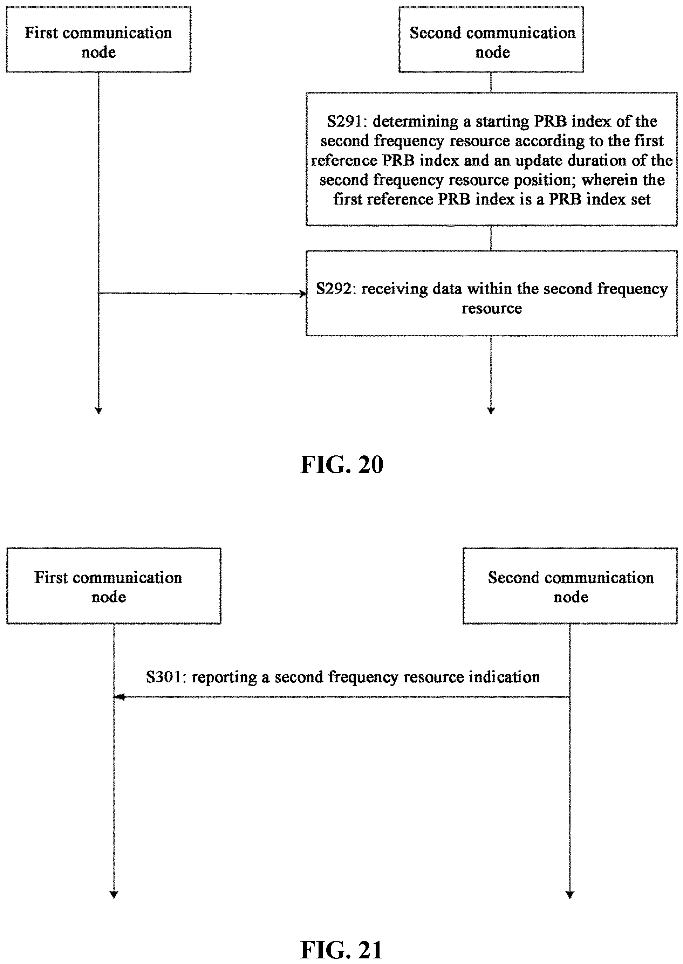

Referring to FIG. 20, the method of receiving data of this embodiment comprises:

Step S291: the second communication node determining a starting PRB index of the second frequency resource according to the reference PRB index and update duration of the second frequency resource position; wherein the reference PRB index is a PRB index set.

Step S292: receiving data within the second frequency resource.

**In** a specific implementation, the starting PRB index of the second frequency resource may be sequentially updated using the PRB index in the PRB index set between the update durations of the second frequency resource position.

That is, the starting PRB of the second frequency resource is unchanged within the update duration range, and the starting PRB index of the second frequency resource is sequentially updated using the PRB index in the PRB index set between update durations.

It is to be understood that the PRB index set is a fixed set, or, the PRB index set may be determined according to the BWP bandwidth, or, the PRB index set is indicated by a high layer parameter; and the update duration of the second frequency resource position is a fixed number of time slots, or, the update duration of the second frequency resource position is indicated by a fourth high layer parameter.

Embodiment 2-10:

Referring to FIG. 21, a method for receiving data of this embodiment comprises:

Step S301: the second communication node reporting an indication of the second frequency resource, wherein the second frequency resource indication corresponds to a second frequency resource index or a starting PRB index of the second frequency resource.

It is to be understood that the second communication node reports the second frequency resource indication to the first communication node to enable the first communication node to determine the PRB index of the second frequency resource according to the second frequency resource indication and send data within the second frequency resource.

In a specific example, the second communication node determines a corresponding second frequency resource index or a starting PRB index of the second frequency resource according to the reported second frequency resource indication, wherein the first OFDM (Orthogonal Frequency Division Multiplexing) symbol following reporting second frequency resource indication up to the starting OFDM symbol of said corresponding second frequency resource need to satisfy a latency requirement, i.e., be greater than or equal to a latency threshold value, and said latency threshold value may be the number of OFDM symbols.

Embodiment 3-1:

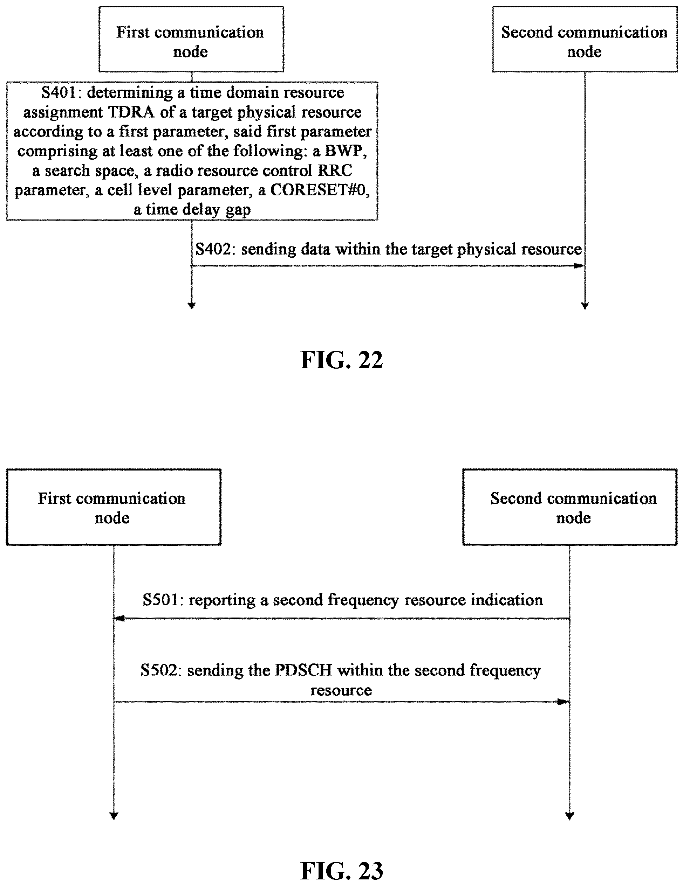

Referring to FIG. 22, this embodiment provides a method of sending data, the method of sending data comprising the following steps:

Step S401, determining a time domain resource assignment (TDRA) of a target physical resource according to a first parameter, said first parameter comprising at least one of the following: a BWP, a search space, a radio resource control (RRC) parameter, a cell level parameter, a CORESET#0, and a time delay gap;

Step S402, sending data within the target physical resource.

Wherein, CORESET#0 is a control resource set numbered 0. The cell level parameters are parameters in the common physical channel.

In one embodiment, said first parameter comprises: a time delay gap. A time domain resource location of the target physical resource is determined according to the time delay gap, comprising:
a time delay gap from the PDCCH of scheduling physical resource to the physical resource is greater than or equal to N symbols or time slots, and the TDRA position of the physical resource is after a specific time delay gap.

Wherein the time delay gap is a predefined value, or determined by a high layer parameter configuration, or determined by a DCI indication.

In one embodiment, the time delay gap is a predefined value, or determined by the high layer parameter configuration, or determined by the DCI indication.

In one embodiment, the time delay gap is determined according to following means: the high layer parameter (e.g., minimumSchedulingOffsetK0) is configured, and a minimum time-domain time-slot interval between the DCI and its scheduled target physical resource, is greater than N, and the time delay gap N is an integer greater than or equal to 0. Wherein, the downlink control information DCI is carried by a physical downlink control channel PDCCH.

In one embodiment, time delay of the TDRA starting symbol indicated by the DCI of scheduling target physical resource and the DCI/PDCCH is greater than or equal to N symbols, and the time delay gap N is an integer greater than or equal to 0. For example, N takes 2,3,4 symbols, etc. The TDRA starting position indicated in the DCI should be at the Nth symbol or N+1st symbol following the last symbol of the PDCCH.

In one embodiment, the scheduled target physical resource may be a shared channel such as PUSCH or PDSCH.

In one embodiment, a communication node sending data is a particular UE type, one of the characteristics of the particular UE type being that the bandwidth or the number of PRBs for the PDSCH/PUSCH scheduling is limited, e.g., limited within 5MHz or the number of PRBs is limited within N PRBs, with N being taken as 11,12 or 25.

In one embodiment, a time domain resource allocation TDRA of the target physical resource is determined according to a first parameter BWP, a search space. Specifically, for a common search space within an initial downlink BWP, the TDRA for scheduling the PUSCH is determined according to a default table or according to a cell-level parameter configuration.

In one embodiment, the time domain resource allocation TDRA of the target physical resource is determined according to the first parameter BWP, the search space. Specifically, for a common search space not within the initial downlink BWP, the TDRA for scheduling the PUSCH is determined according to the default table, the cell level parameter configuration or the RRC parameter configuration.

In one embodiment, the time domain resource allocation TDRA of the target physical resource is determined according to the first parameter BWP, the search space. Specifically, for a common search space within an initial downlink BWP or associated CORESET#0, the TDRA for scheduling the PUSCH is determined according to the default table or determined according to a cell-level parameter configuration.

In one embodiment, the time domain resource allocation TDRA of the target physical resource is determined according to the first parameter BWP, the search space. Specifically, for a common search space not within the initial downlink BWP and not associated with CORESET#0, the TDRA for scheduling the PUSCH is determined according to the default table, the cell level parameter configuration or the RRC parameter configuration.

In one embodiment, the time domain resource allocation TDRA of the target physical resource is determined according to the first parameter BWP, the search space. Specifically, for the common search space not in the initial downlink BWP, the TDRA for scheduling the PUSCH is determined according to the default table, the cell-level parameter configuration or the RRC parameter configuration.

In an embodiment, the DCI scheduling the PUSCH in the common search space is scrambled by the TC-RNTI.

In an embodiment, the initial downlink BWP comprises an independent initial downlink BWP, wherein the independent initial downlink BWP comprises CORESET#0 or does not comprise CORESET#0.

In one embodiment, the TDRA may be a collection of TDRAs, a table of TDRAs, or a separate TDRA indication.

In one embodiment, the DCI scheduling the PUSCH is monitored in a common search space, wherein the common search space may be an RA-searchspace.

In one embodiment, the DCI/PDCCH scheduling PUSCH is scrambled by C-RNTI, MCS-C-RNTI, TC-RNTI, or CS-RNTI. The DCI/PDCCH is monitored within the CSS. The CSS is configured in the initial downlink BWP or the CSS is associated to CORESET#0, while its available PUSCH time domain resource allocation is determined according to the default table e.g., Default A or according to the cell-level (cell specific) parameter configuration, e.g., pusch- Time-DomainAllocationList determination.

In an embodiment, the DCI/PDCCH scheduling the PUSCH is scrambled by C-RNTI, MCS-C-RNTI, TC-RNTI, or CS-RNTI. The DCI/PDCCH is monitored within the CSS. The CSS is configured in an independent initial downlink BWP or the CSS is associated to CORESET#0, while its available PUSCH time domain resource allocation is determined according to the default table e.g., Default A or according to the cell-level (cell specific) parameter configuration, e.g. pusch-TimeDomainAllocationList determination. Optionally, the communication node sending the PUSCH data is of a particular UE type, such as a redcap UE.

In one embodiment, the DCI/PDCCH scheduling PUSCH is scrambled by C-RNTI, MCS-C-RNTI, TC-RNTI, or CS-RNTI. The DCI/PDCCH is monitored within the CSS. The CSS is not configured in the initial downlink BWP and the CSS is not associated with CORESET#0, while its available PUSCH time domain resource allocation is determined according to the default table e.g., Default A or according to the cell-level (cell specific) parameter configuration, e.g., pusch-TimeDomainAllocationList provided in pusch-ConfigCommon, or determined according to RRC parameter configuration, e.g.,pusch-TimeDomainAllocationList provided in pusch-Config.

In one embodiment, the DCI/PDCCH scheduling the PUSCH is scrambled by C-RNTI, MCS-C-RNTI, TC-RNTI, or CS-RNTI. The DCI/PDCCH is monitored within the CSS. The CSS is not configured in an independent initial downlink BWP and the CSS is not associated with CORESET#0, while its available PUSCH time domain resource allocation is determined according to the default table e.g., Default A, or according to the cell-level (cell specific) parameter configuration, e.g., pusch-TimeDomainAllocationList provided in pusch-ConfigCommon, or determined according to RRC parameter configuration, e.g., pusch-TimeDomainAllocationList provided in pusch-Config.

In one embodiment, the DCI/PDCCH scheduling the PUSCH is scrambled by C-RNTI, MCS-C-RNTI, TC-RNTI, or CS-RNTI. The DCI/PDCCH is monitored within the CSS. The CSS is not configured in the initial downlink BWP, while its available PUSCH time domain resource allocation is determined according to the default table, e.g., Default A, or determined according to the cell-level (cell specific) parameter configuration, e.g., pusch-TimeDomainAllocationList provided in pusch-ConfigCommon or determined according to RRC parameter configuration, e.g.,pusch-TimeDomainAllocationList provided in pusch-Config.

In one embodiment, the DCI/PDCCH scheduling the PUSCH is scrambled by C-RNTI, MCS-C-RNTI, TC-RNTI, or CS-RNTI. The DCI/PDCCH is monitored within the CSS. The CSS is not configured in an independent initial downlink BWP, while its available PUSCH time domain resource allocation is determined according to the default table e.g., Default A, or determined according to the cell-level (cell specific) parameter configuration, e.g., pusch-TimeDomainAllocationList provided in pusch-ConfigCommon or determined according to the RRC parameter configuration, e.g., pusch-TimeDomainAllocationList provided in pusch-Config.

In one embodiment, the communication node sending the PUSCH data is of a particular UE type, such as a redcap UE.

In one embodiment, a time domain resource allocation TDRA of a target physical resource is determined according to the first parameter BWP, the search space. Specifically, for the common search space within the initial downlink BWP, the TDRA resources scheduling the PUSCH are determined according to a default table or determined according to a cell level parameter configuration or RRC parameter configuration. Wherein the TDRA resources for the RRC parameter configuration are completely identical or partially identical to the cell level parameter configuration or the default configuration.

In one embodiment, the time domain resource allocation TDRA for the target physical resource is determined according to the first parameter BWP, the search space. Specifically, for the common search space within the initial downlink BWP or CSS associated to CORESET#0, the TDRA resources scheduling the PUSCH are determined according to the default table or determined according to the cell-level parameter configuration or the RRC parameter configuration. Wherein the TDRA resources of the RRC parameter configuration are completely identical or partially identical to the cell level parameter configuration or the default configuration.

In one embodiment, the time domain resource allocation TDRA for the target physical resource is determined according to the first parameter BWP, the search space. Specifically, for the common search space in not within the initial downlink BWP, the TDRA resources scheduling the PUSCH are determined according to the default table or determined according to the cell-level parameter configuration or the RRC parameter configuration.

In one embodiment, the time domain resource allocation TDRA for the target physical resource is determined according to the first parameter BWP, the search space. Specifically, for the common search space in not within the initial downlink BWP and not associated with CORESET#0, the TDRA resources scheduling the PUSCH are determined according to the default table or determined according to the cell-level parameter configuration or RRC parameter configuration.

In one embodiment, the time domain resource allocation TDRA for the target physical resource is determined according to the first parameter BWP, the search space. Specifically, for the common search space within the initial downlink BWP, the TDRA resources scheduling the PUSCH are determined according to the default table or determined according to the cell-level parameter configuration or the RRC parameter configuration. Wherein the TDRA resources of the RRC parameter configuration are completely identical or partially identical to the cell level parameter configuration or the default configuration.

In one embodiment, the time domain resource allocation TDRA for the target physical resource is determined according to the first parameter BWP, the search space. Specifically, in the common search space independent of initial downlink BWP, TDRA resource scheduling PUSCH are determined according to the default table or determined according to the cell-level parameter configuration or the RRC parameter configuration. Wherein the TDRA resources of the RRC parameter configuration are completely identical or partially identical to the cell-level parameter configuration or the default configuration.

In one embodiment, the time domain resource allocation TDRA for the target physical resource is determined according to the first parameter BWP, the search space. Specifically, for the common search space not within the independent initial downlink BWP, the TDRA resources scheduling the PUSCH are determined according to the default table or determined according to the cell-level parameter configuration or the RRC parameter configuration.

In one embodiment, the TDRA resources of the RRC parameter configuration are completely identical or partially identical to the cell-level parameter configuration or the default configuration. Specifically, the list in the RRC parameter configuration, e.g., pusch-TimeDomainAllocationList in pusch-Config, is identical to the cell level (cell specific) parameter configuration, e.g., pusch-TimeDomainAllocationList in pusch-ConfigCommon.

Optionally, the list in the RRC parameter configuration (e.g., pusch-TimeDomainAllocationList in pusch-Config) is identical to the default table, e.g., default A. Or, the list in the RRC parameter configuration comprises default A, e.g., pusch-TimeDomainAllocationList in pusch-Config.

Optionally, some of the TDRA resource locations of the RRC parameter configuration (e.g., pusch-TimeDomainAllocationList in pusch-Config) are identical to the TDRA resources in the cell-level configuration, e.g., pusch-TimeDomainAllocationList in pusch-ConfigCommon.

Optionally, some of the TDRA resource locations of the RRC parameter configuration (e.g., pusch-TimeDomainAllocationList in pusch-Config) are identical to the default table, e.g., default A.

In one embodiment, a time domain resource allocation TDRA for a target physical resource is determined according to the first parameter BWP, the search space. Specifically, for the common search space within the initial downlink BWP, the TDRA resources indicated by the DCI for scheduling PUSCH are common parts of RRC parameter configurations (e.g., pusch-TimeDomainAllocationList in pusch-Config) and the cell level configurations (e.g., pusch-TimeDomainAllocationList in pusch-ConfigCommon).

In one embodiment, a time domain resource allocation TDRA for a target physical resource is determined according to the first parameter BWP, the search space. Specifically, for the common search space within the initial downlink BWP, the TDRA resources indicated by the DCI for scheduling the PUSCH are common parts of the RRC parameter configuration (e.g., pusch-TimeDomainAllocationList in pusch-Config) and the default configuration (default A).

In one embodiment, the user equipment (UE) expects or assumes that within the independent initial downlink BWP, the TDRA resources of the PUSCH scheduled by the common search space are determined according to the default table or determined according to the cell-level parameter configuration. Wherein this independent initial downlink BWP does not include CORESET#0.

In one embodiment, the UE expects or assumes that within the independent initial downlink BWP, the TDRA resources of the PUSCH scheduled by the common search space are determined according to the default table or determined according to the cell level parameter configuration or RRC parameter configuration. wherein this independent initial downlink BWP does not include CORESET#0. Wherein the cell level parameter configuration has completely identical or partially identical TDRA resources to the RRC parameter configuration.

In one embodiment, the UE expects or assumes that time delay gap of the PDCCH-to-physical resource for scheduling the physical resource is greater than or equal to N symbols or time slots, and that the TDRA resource location of the physical resource is following a particular time delay gap. Wherein the time delay gap is a predefined value, or determined by a high layer parameter configuration, or determined by a DCI indication.

In one embodiment, a PDCCH for scheduling a PUSCH is scrambled by C-RNTI, MCS-C-RNTI, TC-RNTI, CS-RNTI and is sent on a CSS. This CSS is sent at a separate initial DL BWP and this separate initial DL BWP does not include CORESET0, while the UE expects/assumes that the PUSCH time domain resource allocation is determined according to Default A or determined according to the pusch-TimeDomainAllocationList provided in pusch-ConfigCommon.

Alternatively, the UE expects/assumes that a list in the configured pusch-Config including pusch-TimeDomainAllocationList is identical to the pusch-TimeDomainAllocationList in pusch-ConfigCommon of cell specific configuration, or identical to default A. Or some of the TDRA resource locations are the same and the DCI indications are the same.

Alternatively, the UE expects that its PUSCH scheduled By CSS will not configure the pusch-TimeDomainAllocationList provided by pusch-Config assuming that the UE uses the separate initial DL BWP as the active BWP.

Embodiment 3-2:

This embodiment provides a method for early identification of a user equipment type (UE type), comprising a first type UE and a second type UE using the same RACH resources, using msg3 to further differentiate the first type UE from the second type UE.

In one embodiment, when Message 3 (Msg3) does not have a Logical channel identification (LCID) indication of the first type UE, the UE sending said Msg3 is the second type UE.

In one embodiment, Msg3 uses an indication of the LCID which may indicate that the UE sending said Msg3 is the second type UE.

Optionally, the second type UE is characterized based on PDSCH/PUSCH scheduled within 5MHz or/and has a limitation on its peak rate.

In one embodiment, a method for early identification of a UE comprises the first type UE and the second type UE sending a preamble sequence (preamble) using different RACH resources or different BWPs, wherein both the first type UE and the second type UE support redcap feature 28-1.

Embodiment 4-1:

Referring to FIG. 23, in conjunction with the communication system shown in FIG. 1, according to the method of sending data and the method of receiving data provided by embodiments of the present application, an interaction process of the first communication node and the second communication node may include the following steps:

Step S501: the second communication node reporting an indication of the second frequency resource, and the second frequency resource indication corresponding to a second frequency resource index or a starting PRB index of the second frequency resource;

Step S502: the first communication node sending the PDSCH within the second frequency resource according to the received second frequency resource indication, and the second communication node receiving the PDSCH within the second frequency resource.

It is to be understood that the second communication node reports the second frequency resource indication to the first communication node to enable the first communication node to determine the PRB index of the second frequency resource according to the second frequency resource indication and to send the data within the second frequency resource, here the data is a PDSCH. The second communication node receives the PDSCH within the second frequency resource according to the reported second frequency resource indication.

**In** a possible specific application scenario of an embodiment of the present application, the first communication node is a base station and the second communication node is a UE, wherein the UE is a Release-18 version standard reduced capacity based user equipment (hereinafter referred to as a Rel-18 RedCap UE) capable of caching only 5MHz bandwidth of PDSCH data. In a specific implementation, the base station determines a PRB index of a second frequency resource based on a pre-agreed first parameter to obtain a position of the second frequency resource in the frequency domain, and then sends a PDSCH to the Rel-18 RedCap UE within the second frequency resource. The Rel-18 RedCap UE determines the PRB index of the second frequency resource based on the pre-agreed first parameter to obtain the position of the second frequency resource in the frequency domain, and then receives the PDSCH sent by the base station within the second frequency resource. With the scheme of the embodiments of the present application, the Rel-18 RedCap UE does not need to wait for the PDCCH decoding to know the position of the PDSCH in the frequency domain, and thus can determine PDSCH data of 5MHz bandwidth required to be cached in the maximum 20MHz bandwidth.

It should be illustrated that in the above embodiments, the description of each embodiment has its own focus, and the parts that are not detailed or documented in a certain embodiment can be refer to the relevant descriptions of other embodiments.

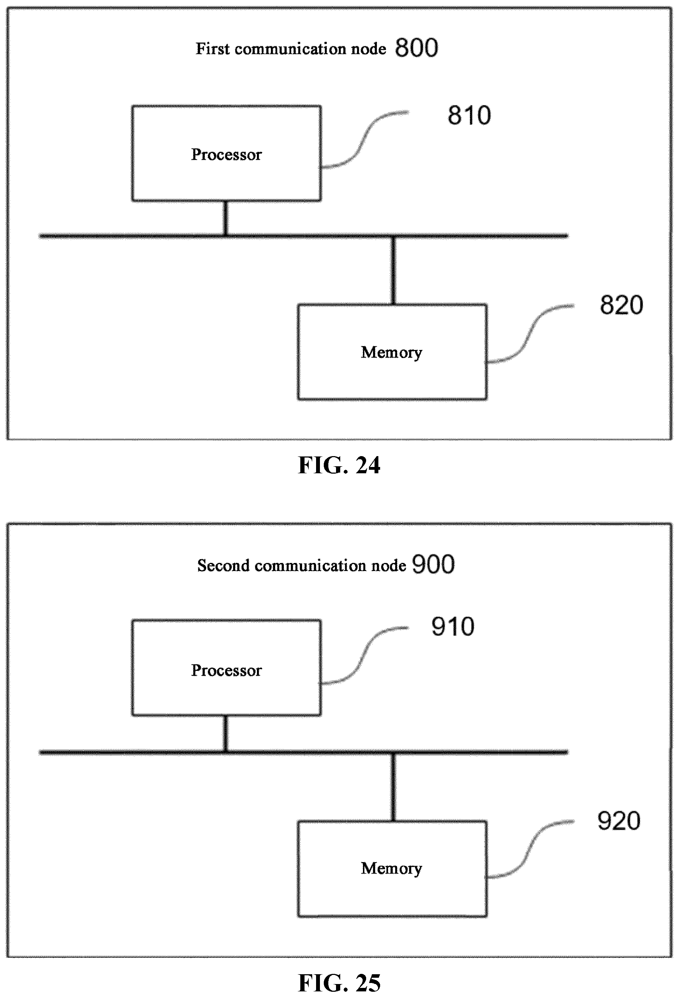

Embodiments of the present application also provide a first communication node, as shown in FIG. 24, in which the first communication node 800 includes, but is not limited to:

at least one processor 810;

at least one memory 820 for storing at least one program;

when the at least one said program is executed by the at least one said processor 810, performing the method of sending data as described in any of the above embodiments.

It should be appreciated that the processor 810 and the memory 820 described above may be connected via a bus or other manners.

It should be appreciated that the processor 810 may employ a Central Processing Unit (CPU). The processor may also be other general-purpose processor, Digital Signal Processor (DSP), Application Specific Integrated Circuit (ASIC), Field Programmable Gate Array (FPGA) or other programmable logic device, discrete gate or transistor logic device, discrete hardware component, etc. The general-purpose processor may be a microprocessor or the processor may be any conventional processor, etc. Alternatively, the processor 810 employs one or more integrated circuits for executing relevant programs to implement the technical solutions provided by embodiments of the present application.

The memory 820 serves as a non-transitory computer-readable storage medium that can be used to store non-transitory software programs as well as non-transitory computer-executable programs such as the method of sending data described in any embodiment of this application. The processor 810 implements the method of sending data described above by running the non-transitory software program stored in the memory 820 as well as the instructions.

The memory 820 may include a storage program area and a storage data area, wherein the storage program area may store an operating system, an application program required for at least one function; and the storage data area may store the method of sending data described above for execution. In addition, the memory 820 may include high-speed random-access memory and may also include non-transitory memory, such as at least one disk memory device, flash memory device, or other non-transitory solid state memory device. In some implementations, the memory 820 may optionally include a memory that is remotely set with respect to the processor 810, and these remote memories may be connected to the processor 810 via a network. Examples of the networks described above include, but are not limited to, the Internet, an enterprise intranet, a local area network, a mobile communications network, and combinations thereof.

The non-transitory software programs as well as instructions required to implement the above-described method for sending data are stored in the memory 820, and when executed by the one or more processors 810, the method for sending data provided by any embodiment of the present application is executed.

Embodiments of the present application also provide a second communication node, as shown in FIG. 25, in which the second communication node 900 includes but is not limited to:

at least one processor 910;

at least one memory 920 for storing at least one program;

when the at least one said program is executed by the at least one said processor 910, performing the method for receiving data as described in any of the above embodiments.

It should be appreciated that the processor 910 and the memory 920 described above may be connected via a bus or other manners.

It should be appreciated that the processor 910 may employ a Central Processing Unit (CPU). The processor may also be other general-purpose processor, Digital Signal Processor (DSP), Application Specific Integrated Circuit (ASIC), Field Programmable Gate Array (FPGA) or other programmable logic device, discrete gate or transistor logic device, discrete hardware components, etc. The general-purpose processor may be a microprocessor or the processor may also be any conventional processor, etc. Alternatively, the processor 910 employs one or more integrated circuits for executing a relevant program to implement the technical solutions provided by embodiments of the present application.

The memory 920 serves as a non-transitory computer-readable storage medium that can be used to store non-transitory software programs as well as non-transitory computer-executable programs, such as the method for receiving data performed at the second communication node side as described in any embodiment of the present application. The processor 910 implements the method for receiving data described above by running the non-transitory software program and instructions stored in the memory 920.

The memory 920 may include a storage program area and a storage data area, wherein the storage program area may store an operating system, an application program required for at least one function; and the storage data area may store the method for receiving data described above for execution data. **In** addition, the memory 920 may include a high-speed random-access memory, and may also include a non-transitory memory, such as at least one disk memory device, a flash memory device, or other non-transitory solid state memory device. **In** some implementations, the memory 920 may optionally include memories remotely set relative to the processor 910, and these remote memories may be connected to the processor 910 via a network. Examples of the above-described networks include but are not limited to the Internet, an enterprise intranet, a local area network, a mobile communications network, and combinations thereof.

The non-transitory software program and instructions required to implement the above-described method for receiving data are stored in the memory 920, and when executed by the one or more processors 910, performing the method for receiving data provided by any embodiment of the present application.

Embodiments of the present application also provide a computer-readable storage medium, the computer-readable storage medium storing a processor-executable program, said processor-executable program, when executed by the processors, being used to implement the method for sending data as described in any embodiment above, or, to implement the method for receiving data as described in any embodiment above.

**In** one specific embodiment, the computer-readable storage medium described above may be used to implement various steps of the method for sending data corresponding to the first communication node in the above method embodiment.

**In** another specific embodiment, the computer-readable storage medium described above may be used to implement various steps of the method for receiving data corresponding to the second communication node in the method embodiment described above.

The computer storage medium of an embodiment of the present application may employ any combination of one or more computer-readable media. The computer-readable medium may be a computer-readable signaling medium or a computer-readable storage medium. The computer-readable storage medium may, for example, be, but is not limited to, a system, apparatus, or device of electricity, magnetism, light, electromagnetism, infrared, or semiconductors, or any combination of the above. More specific examples of computer-readable storage media (a non-exhaustive list) include: an electrical connection having one or more wires, a portable computer disk, a hard disk, a random access memory (RAM), a read-only memory (ROM), an erasable programmable read-only memory (EPROM or flash memory), a fiber optic, a portable compact disk read-only memory (CD-ROM), an optical storage device, a magnetic storage device, or any suitable combination of the above. **In** this file, a computer-readable storage medium may be any tangible medium containing or storing a program that may be used by or in combination with an instruction execution system, apparatus, or device.

The computer-readable signal medium may include a data signal propagated in baseband or as part of a carrier carrying computer-readable program code. Such propagated data signals may take a variety of forms, including, but not limited to, electromagnetic signals, optical signals, or any suitable combination of the foregoing. The computer-readable signaling medium may also be any computer-readable medium other than a computer-readable storage medium that sends, propagates, or transmits a program for use by, or in combination with, an instruction-executing system, apparatus, or device.

The program code contained on the computer-readable medium may be transmitted in any suitable medium, including, but not limited to, wireless, wire, fiber optic cable, RF, etc., or any suitable combination of the foregoing.

The computer program code for performing the operations of the present application may be written in one or more programming languages, or combinations thereof, including object-oriented programming languages - such as Java, Smalltalk, C++ - and conventional procedural programming languages - such as the "C" language or the like. The program code may be executed entirely on the user's computer, partially on the user's computer, as a stand-alone software package, partially on the user's computer and partially on a remote computer, or entirely on a remote computer or server. In case of involving a remote computer, the remote computer may be connected to the user's computer via any kind of network, including a local area network (LAN) or a wide area network (WAN), or may be connected to an external computer (e.g., by utilizing an Internet service provider to connect via the Internet).

Embodiments of the present application provide a computer program product, the computer program product storing program instructions, the program instructions, when run on a computer, causing the computer to implement the method for sending data as described in any of the above embodiments, or to implement the method for receiving data as described in any of the above embodiments.

In one specific embodiment, the computer program product described above may be used to implement various steps of the method for sending data corresponding to the first communication node in the method embodiment described above.

In another specific embodiment, the computer program product described above may be used to realize various steps of the method for receiving data corresponding to the second communication node in the method embodiment described above.

The above is a specific description of several embodiments of the present application, but the present application is not limited to the above embodiments, and the person skilled in the art may also make various equivalent deformations or substitutions without violating the shared conditions of the scope of the present application, and these equivalent deformations or substitutions are included in the scope limited by the present application.

**Claims**

1.  A method for sending data comprising:

    determining a physical resource block PRB index of a second frequency resource according to a first parameter, said first parameter comprising at least one of the following: a reference PRB index, a time slot index, a PRB offset, a number of PRBs contained in a first frequency resource, an update duration of a second frequency resource position, an indication of the second frequency resource;
    sending data within said second frequency resource.

2.  The method according to claim 1, wherein said determining a physical resource block PRB index of the second frequency resource according to the first parameter comprises:

    determining a starting PRB index of the second frequency resource according to said reference PRB index;
    wherein said reference PRB index is a fixed PRB index within said first frequency resource, or, said reference PRB index is indicated by a first high layer parameter.

3.  The method according to claim 2, wherein said starting PRB index of the second frequency resource is determined according to the following formula:

    $$\text{the starting PRB index of the second frequency resource} = \left\lfloor N_0 \cdot 2^{\mu' - \mu} \right\rfloor$$

    wherein $N_0$ denotes said reference PRB index, $\mu'$ denotes a subcarrier spacing index of said first frequency resource, and $\mu$ denotes a subcarrier spacing index of said second frequency resource.

4.  The method according to claim 1, wherein said determining a physical resource block PRB index of the second frequency resource according to the first parameter comprises:

    determining an end PRB index of the second frequency resource according to said reference PRB index;
    wherein said reference PRB index is an end PRB index of said first frequency resource.

5.  The method according to claim 4, wherein in the case of a subcarrier spacing of the first frequency resource being less than or equal to a subcarrier spacing of the second frequency resource, the end PRB index of said second frequency resource is determined according to the following formula:

    $$\text{the end PRB index of the second frequency resource} = \left\lfloor N_1 \cdot 2^{\mu' - \mu} \right\rfloor ;$$

    or,

    in the case of the subcarrier spacing of the first frequency resource being greater than the subcarrier spacing of the second frequency resource, the end PRB index of said second frequency resource is determined according to the following formula:

    $$\text{the end PRB index of the second frequency resource} = N_1 \cdot 2^{\mu' - \mu} + 1 ;$$

    wherein $N_1$ denotes the end PRB index of said first frequency resource, $\mu'$ denotes the subcarrier spacing index of said first frequency resource, and $\mu$ denotes the subcarrier spacing index of said second frequency resource.

6.  The method according to claim 1, wherein said determining a physical resource block PRB index of the second frequency resource according to the first parameter comprises:
    determining a starting PRB index of the second frequency resource according to the number of PRBs contained in said first frequency resource.

7.  The method according to claim 6, wherein the starting PRB index of said second frequency resource is determined according to the following formula:

the starting PRB index of the second frequency resource $= \left\lfloor \left( \left( N_S + \left\lceil \frac{N_{PRB}}{2} \right\rceil \right) \cdot 2^{\mu' - \mu} \right) - \left\lfloor \frac{P}{2} \right\rfloor \right\rfloor$,

wherein $N_S$ denotes a starting PRB index of said first frequency resource, $N_{PRB}$ denotes the number of PRBs contained in said first frequency resource, P denotes a number of PRBs contained in said second frequency resource, $\mu'$ denotes a subcarrier spacing index of said first frequency resource, and $\mu$ denotes a subcarrier spacing index of said second frequency resource.

8. The method according to claim 1, wherein said reference PRB index is a starting PRB index or an end PRB index of said first frequency resource;
said determining a physical resource block PRB index of the second frequency resource according to the first parameter comprising at least one of the following:

a first manner, determining a starting PRB index of said second frequency resource according to the starting PRB index of said first frequency resource;
or,
a second manner, determining an end PRB index of said second frequency resource according to the end PRB index of said first frequency resource.

9. The method according to claim 8, further comprising:

indicating, by a second high layer parameter, to use first manner or second manner to determine a physical resource block PRB index of the second frequency resource;
or
determining the physical resource block PRB index of the second frequency resource by alternately using said first manner and said second manner.

10. The method according to claim 1, wherein said determining the physical resource block PRB index of the second frequency resource according to the first parameter comprises one of the following:

indicating a reference PRB index by a third high layer parameter;
or,
indicating, by downlink control information, DCI, the reference PRB index of the second frequency resource where a physical downlink shared channel scheduled by a next DCI is located;
wherein said reference PRB index denotes a starting PRB index of said second frequency resource.

11. The method according to claim 1, wherein said determining a physical resource block PRB index of the second frequency resource according to the first parameter comprises:
determining a starting PRB index of said second frequency resource according to said reference PRB index, said time slot index, said PRB offset, and said update duration of the second frequency resource position.

12. The method according to claim 11, wherein the starting PRB index of said second frequency resource is determined according to the following formula:

the starting PRB index of the second frequency resource $= N_0 + mod\left(\frac{S}{T}, K\right) \cdot N_{offset}$;

wherein $N_0$ denotes said reference PRB index, $N_{offset}$ denotes said PRB offset, S denotes said time slot index, T denotes said update duration of the second frequency resource position, and K denotes the number of second frequency resources contained on the frequency domain.

13. The method according to claim 12, wherein said number of the second frequency resources contained on the frequency domain is determined according to the following formula:

$$K = \left\lfloor \frac{M_{PRB} - N_0 - 1}{N_{offset}} \right\rfloor + 1;$$

wherein $M_{PRB}$ denotes the number of PRBs contained in said first frequency resource.

14. The method according to claim 11, wherein the starting PRB index of said second frequency resource is determined according to the following formula:

$$\text{the starting PRB index of the second frequency resource} = \text{mod}\left(N_0 + \frac{S}{T} \cdot N_{offset}, M_{PRB}\right);$$

wherein $M_{PRB}$ denotes the number of PRBs contained in said first frequency resource, $N_0$ denotes said reference PRB index, $N_{offset}$ denotes said PRB offset, S denotes said time slot index, and T denotes said update duration of the second frequency resource position.

15. The method according to claim 1, wherein said determining a physical resource block PRB index of the second frequency resource according to the first parameter comprises:

    determining a starting PRB index of said second frequency resource according to said reference PRB index and said update duration of the second frequency resource position;
    wherein said reference PRB index is a PRB index set.

16. The method according to claim 15, further comprising:
    the starting PRB index of the second frequency resource is sequentially updated using a PRB index in said PRB index set, between said update durations of the second frequency resource position.

17. The method according to claim 1, wherein the starting PRB index of the second frequency resource is unchanged within one update duration range of the second frequency resource position.

18. The method according to claim 1, wherein said update duration of the second frequency resource position is a fixed number of time slots, or, said update duration of the second frequency resource position is indicated by a fourth high layer parameter.

19. The method according to claim 1, wherein said determining a physical resource block PRB index of the second frequency resource according to the first parameter comprises:

    determining a PRB index of said second frequency resource according to the indication of said second frequency resource reported by a second communication node;
    wherein said indication of the second frequency resource corresponds to an index of said second frequency resource or a starting PRB index of said second frequency resource.

20. A method for receiving data, comprising:

    determining a physical resource block PRB index of a second frequency resource according to a first parameter, said first parameter comprising at least one of the following: a reference PRB index, a time slot index, a physical resource block offset, a number of PRBs contained in the first frequency resource, an update duration of a second frequency resource position, an indication of the second frequency resource;
    receiving data within said second frequency resource.

21. The method according to claim 20, further comprising:
    reporting the indication of the second frequency resource, wherein said indication of the second frequency resource corresponds to an index of the second frequency resource or a starting PRB index of said second frequency resource.

22. A method for sending data, comprising:

    determining a time domain resource allocation TDRA for a target physical resource according to a first parameter, said first parameter comprising at least one of the following: a bandwidth part BWP, a search space, a radio resource control RRC parameter, a cell level parameter, a control resource set numbered 0, a time delay gap;
    sending data within said target physical resource.

23. The method according to claim 22, wherein determining a TDRA resource for the target physical resource according to said bandwidth part BWP, said search space in the first parameter comprises:

for a common search space within an initial downlink BWP, the TDRA for scheduling the physical uplink shared channel PUSCH is determined according to a default table or determined according to cell level parameter configuration, or,
for the common search space within the initial downlink BWP or associated with CORESET#0, the TDRA for scheduling the PUSCH is determined according to the default table or determined according to cell level parameter configuration, or,
for the common search space within the initial downlink BWP, the TDRA resources for scheduling the PUSCH are determined according to the default table or determined according to cell level parameter configuration or RRC parameter configuration, wherein the TDRA resources for the RRC parameter configuration are completely identical or partially identical to cell level parameter configuration or the default table.

24. The method according to claim 23, wherein a DCI for scheduling the physical uplink shared channel PUSCH in the common search space is scrambled by a temporary cell radio network temporary identity TC-RNTI.

25. The method according to claim 23, wherein said initial downlink BWP comprises an independent initial downlink BWP, wherein the independent initial downlink BWP comprises CORESET#0 or does not comprise CORESET#0.

26. The method according to claim 22, wherein determining a TDRA of a target physical resource according to a first parameter time delay gap comprises:

a time delay gap of scheduling a PDCCH of a physical resource to the physical resource is greater than or equal to N symbols or time slots, and a TDRA position of the physical resource is following a particular time delay gap; wherein the time delay gap is a predefined value, or determined by a high layer parameter configuration or determined by a DCI indication.

27. A first communication node, comprising:

at least one processor;
at least one memory for storing at least one program;
wherein when at least one said program is executed by at least one said processor, implementing:

the method for sending data as claimed in any one of claims 1 to 19;
or
the method for sending data as claimed in any one of claims 22 to 26.

28. A second communication node, comprising:

at least one processor;
at least one memory for storing at least one program;
wherein when at least one said program is executed by at least one said processor, implementing the method for receiving data as claimed in any one of claims 20 to 21.

29. A computer-readable storage medium in which a processor-executable program is stored, wherein said processor-executable program is used to implement when executed by the processor:

the method for sending data as claimed in any one of claims 1 to 19;
or,
the method for receiving data as claimed in any one of claims 20 to 21;
or,
the method of sending data as claimed in any one of claims 22 to 26.

30. A computer program product comprising a computer program or computer instructions, wherein said computer program or said computer instructions are stored in a computer-readable storage medium, a processor of a computer device reads said computer program or said computer instructions from said computer-readable storage medium, and said processor executes said computer program or said computer instructions, causing said computer device to execute:

the method for sending data as claimed in any one of claims 1 to 19;
or,
the method for receiving data as claimed in any one of claims 20 to 21;
or,
the method for sending data as claimed in any one of claims 22 to 26.

Communication system 10

First communication
node 11

Second communication
node 12

## FIG. 1

First communication
node

Second communication
node

S101: determining a physical resource block PRB
index of a second frequency resource according to a
first parameter, the first parameter comprising at
least one of the following: a first reference PRB
index, a slot index, a PRB offset, a number of PRBs
contained in the first frequency resource, an update
duration of a second frequency resource position, and
an indication of the second frequency resource

S102: sending data within the second frequency resource

## FIG. 2

First communication
node

Second communication
node

S111: determining a starting PRB index of the
second frequency resource according to the first
reference PRB index

S112: sending data within the second frequency
resource

**FIG. 3A**

First communication
node

Second communication
node

S121: determining an end PRB index of the second
frequency resource according to the first reference
PRB index

S122: sending data within the second frequency
resource

**FIG. 3B**

First communication node

Second communication node

S131: determining a starting PRB index of the second frequency resource according to a number of PRBs contained in the first frequency resource

S132: sending data within the second frequency resource

**FIG. 4**

First communication node

Second communication node

S141: determining a PRB index of the second frequency resource according to a first manner or a second manner, wherein the first manner is to determine a starting PRB index of the second frequency resource according to a starting PRB index of the first frequency resource, and the second manner is to determine an end PRB index of the second frequency resource according to an end PRB index of the first frequency resource

S142: sending data within the second frequency resource

**FIG. 5**

```
┌─────────────────────┐                              ┌─────────────────────┐
│  First communication │                              │ Second communication │
│        node          │                              │        node          │
└─────────────────────┘                              └─────────────────────┘
           │                                                     │
┌─────────────────────────────────────┐                         │
│ S151: indicating a second reference  │                         │
│ PRB index by a third high layer      │                         │
│ parameter, the second reference PRB  │                         │
│ index denoting a starting PRB index  │                         │
│ of the second frequency resource     │                         │
└─────────────────────────────────────┘                         │
           │                                                     │
           │   S152: sending data within the second frequency    │
           │                    resource                         │
           │ ──────────────────────────────────────────────────▶│
           │                                                     │
           ▼                                                     ▼
```

FIG. 6

```
┌─────────────────────┐                              ┌─────────────────────┐
│  First communication │                              │ Second communication │
│        node          │                              │        node          │
└─────────────────────┘                              └─────────────────────┘
           │                                                     │
┌────────────────────────────────────────┐                      │
│ S161: indicating, by downlink control   │                      │
│ information DCI, the second reference    │                      │
│ PRB index of the second frequency       │                      │
│ resource where a next DCI-scheduled     │                      │
│ physical downlink shared channel is      │                      │
│ located, the second reference PRB index │                      │
│ denotes the starting PRB index of the   │                      │
│ second frequency resource               │                      │
└────────────────────────────────────────┘                      │
           │                                                     │
           │   S162: sending data within the second frequency    │
           │                    resource                         │
           │ ──────────────────────────────────────────────────▶│
           │                                                     │
           ▼                                                     ▼
```

FIG. 7

30

First communication node

Second communication node

S171: determining a starting PRB index of the second frequency resource according to a first reference PRB index, a slot index, a PRB offset, an update duration of a second frequency resource position

S172: sending data within the second frequency resource

**FIG. 8**

First communication node

Second communication node

S181: determining the starting PRB index of the second frequency resource according to the first reference PRB index, the PRB offset

S182: sending data within the second frequency resource

**FIG. 9**

First communication node

Second communication node

S191: determining a starting PRB index of the second frequency resource according to the first reference PRB index and an update duration of the second frequency resource position; wherein the first reference PRB index is a PRB index set

S192: sending data within the second frequency resource

**FIG. 10**

First communication node

Second communication node

S201: determining a starting PRB index of the second frequency resource according to a first reference PRB index and an update duration of a second frequency resource position; wherein the first reference PRB index is a PRB index set

S202: receiving data within the second frequency resource

**FIG. 11**

First communication node

Second communication node

S211: determining a starting PRB index of the second frequency resource according to the first reference PRB index

S212: receiving data within the second frequency resource

**FIG. 12**

First communication node

Second communication node

S221: determining an end PRB index of the second frequency resource according to the first reference PRB index

S222: receiving data within the second frequency resource

**FIG. 13**

First communication node

Second communication node

S231: determining a starting PRB index of the second frequency resource according to a number of PRBs contained in the first frequency resource

S232: receiving data within the second frequency resource

**FIG. 14**

First communication node

Second communication node

S241: determining a PRB index of the second frequency resource according to a first manner or a second manner, wherein the first manner is to determine a starting PRB index of the second frequency resource according to a starting PRB index of the first frequency resource, and the second manner is to determine an end PRB index of the second frequency resource according to an end PRB index of the first frequency resource

S242: receiving data within the second frequency resource

**FIG. 15**

```
┌─────────────────────┐                    ┌─────────────────────┐
│  First communication │                    │ Second communication │
│        node          │                    │        node          │
└──────────┬──────────┘                    └──────────┬──────────┘
           │                                           │
           │                    ┌──────────────────────┴──────────────────────┐
           │                    │ S251: indicating by a third high layer       │
           │                    │ parameter a second reference PRB index, the  │
           │                    │ second reference PRB index denotes a starting│
           │                    │ PRB index of the second frequency resource   │
           │                    └──────────────────────┬──────────────────────┘
           │                                           │
           │                    ┌──────────────────────┴──────────────────────┐
           └───────────────────▶│ S252: receiving data within the second      │
           │                    │ frequency resource                           │
           │                    └──────────────────────┬──────────────────────┘
           ▼                                           ▼
```

## FIG. 16

```
┌─────────────────────┐                    ┌─────────────────────┐
│  First communication │                    │ Second communication │
│        node          │                    │        node          │
└──────────┬──────────┘                    └──────────┬──────────┘
           │                                           │
           │              ┌────────────────────────────┴──────────────────────┐
           │              │ S261: indicating, by downlink control information   │
           │              │ DCI, the second reference PRB index of the          │
           │              │ second frequency resource where a next              │
           │              │ DCI-scheduled physical downlink shared channel      │
           │              │ is located, the second reference PRB index denotes  │
           │              │ the starting PRB index of the second frequency      │
           │              │ resource                                            │
           │              └────────────────────────────┬──────────────────────┘
           │                                           │
           │              ┌────────────────────────────┴──────────────────────┐
           └─────────────▶│ S262: receiving data within the second frequency   │
           │              │ resource                                            │
           │              └────────────────────────────┬──────────────────────┘
           ▼                                           ▼
```

## FIG. 17

```
┌─────────────────────┐              ┌─────────────────────┐
│  First communication│              │ Second communication│
│        node         │              │        node         │
└─────────────────────┘              └─────────────────────┘
           │                                    │
           │                         ┌─────────────────────────────┐
           │                         │ S271: determining a starting│
           │                         │ PRB index of the second     │
           │                         │ frequency resource according│
           │                         │ to a first reference PRB    │
           │                         │ index, a slot index, a PRB  │
           │                         │ offset, and an update       │
           │                         │ duration of the second      │
           │                         │ frequency resource position │
           │                         └─────────────────────────────┘
           │                                    │
           │                         ┌─────────────────────────────┐
           │────────────────────────▶│ S272: receiving data within │
           │                         │ the second frequency        │
           │                         │ resource                    │
           │                         └─────────────────────────────┘
           │                                    │
           ▼                                    ▼
```

# FIG. 18

```
┌─────────────────────┐              ┌─────────────────────┐
│  First communication│              │ Second communication│
│        node         │              │        node         │
└─────────────────────┘              └─────────────────────┘
           │                                    │
           │                         ┌─────────────────────────────┐
           │                         │ S281: determining a starting│
           │                         │ PRB index of the second     │
           │                         │ frequency resource according│
           │                         │ to the first reference PRB  │
           │                         │ index, the PRB offset        │
           │                         └─────────────────────────────┘
           │                                    │
           │                         ┌─────────────────────────────┐
           │────────────────────────▶│ S282: receiving data within │
           │                         │ the second frequency        │
           │                         │ resource                    │
           │                         └─────────────────────────────┘
           │                                    │
           ▼                                    ▼
```

# FIG. 19

First communication node

Second communication node

S291: determining a starting PRB index of the second frequency resource according to the first reference PRB index and an update duration of the second frequency resource position; wherein the first reference PRB index is a PRB index set

S292: receiving data within the second frequency resource

**FIG. 20**

First communication node

Second communication node

S301: reporting a second frequency resource indication

**FIG. 21**

| First communication node | | Second communication node |
| --- | --- | --- |

S401: determining a time domain resource assignment TDRA of a target physical resource according to a first parameter, said first parameter comprising at least one of the following: a BWP, a search space, a radio resource control RRC parameter, a cell level parameter, a CORESET#0, a time delay gap

S402: sending data within the target physical resource

## FIG. 22

| First communication node | | Second communication node |
| --- | --- | --- |

S501: reporting a second frequency resource indication

S502: sending the PDSCH within the second frequency resource

## FIG. 23

First communication node 800

Processor 810

Memory 820

**FIG. 24**

Second communication node 900

Processor 910

Memory 920

**FIG. 25**

## INTERNATIONAL SEARCH REPORT

| International application No. |
|---|
| **PCT/CN2023/096569** |

| A. | CLASSIFICATION OF SUBJECT MATTER |
|---|---|
| | H04W72/0453(2023.01)i; H04W72/53(2023.01)i |

According to International Patent Classification (IPC) or to both national classification and IPC

| B. | FIELDS SEARCHED |
|---|---|

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, ENTXTC, CNKI: PRB, 索引, 第一, 起始, 末尾, 降低, 能力, 性能, 带宽, UE, 终端, 设备, 资源, reducd, capability, first, start+, index, redcap, TDRA, resource?

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115915418 A (ZTE CORP.) 04 April 2023 (2023-04-04)<br>claims 1-30 | 1-30 |
| X | WO 2022031824 A1 (RASTEGARDOOST NAZANIN et al.) 10 February 2022 (2022-02-10)<br>claims 1-178, and description, paragraphs 221-299 | 1, 2, 4, 6, 8-11,<br>19-22, 27-30 |
| X | WO 2022031062 A1 (WILUS INSTITUTE OF STANDARDS AND TECHNOLOGY INC.)<br>10 February 2022 (2022-02-10)<br>claims 1-20 | 1, 2, 4, 6, 8-11,<br>19-21, 27-30 |
| A | CN 114271002 A (BEIJING XIAOMI MOBILE SOFTWARE CO., LTD.) 01 April 2022<br>(2022-04-01)<br>entire document | 1-30 |
| A | WO 2021204183 A1 (RESEARCH INSTITUTE OF CHINA MOBILE<br>COMMUNICATIONS CORPORATION et al.) 14 October 2021 (2021-10-14)<br>entire document | 1-30 |
| A | WO 2022075343 A1 (SHARP KK) 14 April 2022 (2022-04-14)<br>entire document | 1-30 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 September 2023** | **28 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/096569** |

| C. | DOCUMENTS CONSIDERED TO BE RELEVANT | |
| --- | --- | --- |
| Category* | Citation of document, with indication, where appropriate, of the relevant passages | Relevant to claim No. |
| A | WO 2022089334 A1 (DATANG MOBILE COMMUNICATIONS EQUIPMENT CO., LTD.) 05 May 2022 (2022-05-05) entire document | 1-30 |
| A | WO 2022183455 A1 (GUANGDONG OPPO MOBILE TELECOMMUNICATIONS CORP., LTD.) 09 September 2022 (2022-09-09) entire document | 1-30 |

Form PCT/ISA/210 (second sheet) (July 2022)

## INTERNATIONAL SEARCH REPORT
**Information on patent family members**

International application No.

**PCT/CN2023/096569**

| Patent document cited in search report | | | Publication date (day/month/year) | Patent family member(s) | | | Publication date (day/month/year) |
|---|---|---|---|---|---|---|---|
| CN | 115915418 | A | 04 April 2023 | None | | | |
| WO | 2022031824 | A1 | 10 February 2022 | None | | | |
| WO | 2022031062 | A1 | 10 February 2022 | KR | 20230005223 | A | 09 January 2023 |
| | | | | US | 2023189308 | A1 | 15 June 2023 |
| | | | | JP | 2023537023 | A | 30 August 2023 |
| CN | 114271002 | A | 01 April 2022 | None | | | |
| WO | 2021204183 | A1 | 14 October 2021 | None | | | |
| WO | 2022075343 | A1 | 14 April 2022 | None | | | |
| WO | 2022089334 | A1 | 05 May 2022 | KR | 20230096071 | A | 29 June 2023 |
| | | | | AU | 2021369864 | A1 | 01 June 2023 |
| | | | | EP | 4240080 | A1 | 06 September 2023 |
| WO | 2022183455 | A1 | 09 September 2022 | None | | | |

Form PCT/ISA/210 (patent family annex) (July 2022)

**REFERENCES CITED IN THE DESCRIPTION**

**Patent documents cited in the description**

- CN 202211214991